# EUROPEAN PATENT APPLICATION

(11) **EP 4 671 806 A1**
(43) Date of publication of application: **31.12.2025**
(21) Application number: 25174450.4
(22) Date of filing: 06.05.2025
(51) Int. Cl.: G01S 7/00, H04W 84/12, H04W 74/00, H04W 72/0446

(54) **MONOSTATIC SENSING OVER A MILLIMETERWAVE (MMWAVE) BAND**

(30) Priority: 29.06.2024 US 202418759858
(71) Applicant: INTEL Corporation, Santa Clara, CA 95054 (US)
(72) Inventor: CHEN, Cheng, Camas, 98607 (US); CARIOU, Laurent, 29290 Milizac (FR); CORDEIRO, Carlos, Camas, 98607 (US)
(74) Representative: Viering, Jentschura & Partner mbB Patent- und Rechtsanwälte

(57) **Abstract**

For example, an apparatus may include logic and circuitry configured to cause a sensing initiator station (STA) to transmit one or more timeslot-scheduling frames over a sub 10 Gigahertz (GHz) (sub-10GHz) wireless communication frequency band to schedule one or more timeslots of a coordinated monostatic millimeterWave (mmWave) sensing measurement exchange for a plurality of sensing responder STAs; to transmit a trigger frame over an mmWave wireless communication frequency band during a timeslot of the one or more timeslots; and to process a frame from a sensing responder STA to participate in a monostatic sounding during the timeslot, the frame from the sensing responder STA received over the mmWave wireless communication frequency band during the timeslot.

## Description

### BACKGROUND

Wireless sensing is a term given to a usage of wireless technology to perform radar-like applications. For example, wireless sensing may be used to detect motion in a room, for example, to detect when a person approaches a target device.

The wireless sensing may be implemented by a wireless communication device, which is capable to communicate wireless signals, for example, to detect changes in an environment where the wireless signals propagate.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Figs. 4A, 4B, and 4C are schematic illustrations of a coordinated monostatic sensing procedure in a sequential mode using a Target Wake Time (TWT), in accordance with some demonstrative aspects.
Figs. 5A and 5B are schematic illustrations of a coordinated monostatic sensing procedure in a parallel mode using a TWT, in accordance with some demonstrative aspects.
Figs. 6A and 6B are schematic illustrations of a coordinated monostatic sensing procedure in a sequential mode using availability windows, in accordance with some demonstrative aspects.
Fig. 7 is a schematic illustration of a coordinated monostatic sensing procedure in a parallel mode using one or more availability windows, in accordance with some demonstrative aspects.
Fig. 8 is a schematic flow-chart illustration of a method of monostatic sensing over a millimeterWave (mmWave) band, in accordance with some demonstrative aspects.
Fig. 9 is a schematic flow-chart illustration of a method of monostatic sensing over an mmWave band, in accordance with some demonstrative aspects.
Fig. 10 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020*)*;* IEEE 802.11be (*IEEE P802.11be*/*D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023);* and/or IEEE 802.11bf (*IEEE P802.11bf*/*D4.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 4: Enhancements for Wireless LAN Sensing, April 2024*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated, or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a sub-7GHz frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 40GHz, for example, a frequency band above 45GHz, e.g., a 60GHz frequency band, a frequency band between 42.5GHz and 71GHz, and/or any other mmWave frequency band.

Some demonstrative aspects may be used in conjunction with a wireless communication network communicating over the sub-10GHz frequency band and/or the mmWave frequency band, e.g., as described below. However, other aspects may be implemented utilizing any other suitable wireless communication frequency bands, for example, a 5G frequency band, a frequency band below 20GHz, a Sub 1GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16GHz channels. For example, the channel bonding mechanisms may include, for example, a mechanism and/or an operation whereby two or more channels, e.g., 2.16GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32GHz, a channel BW of 6.48GHz, a channel BW of 8.64GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

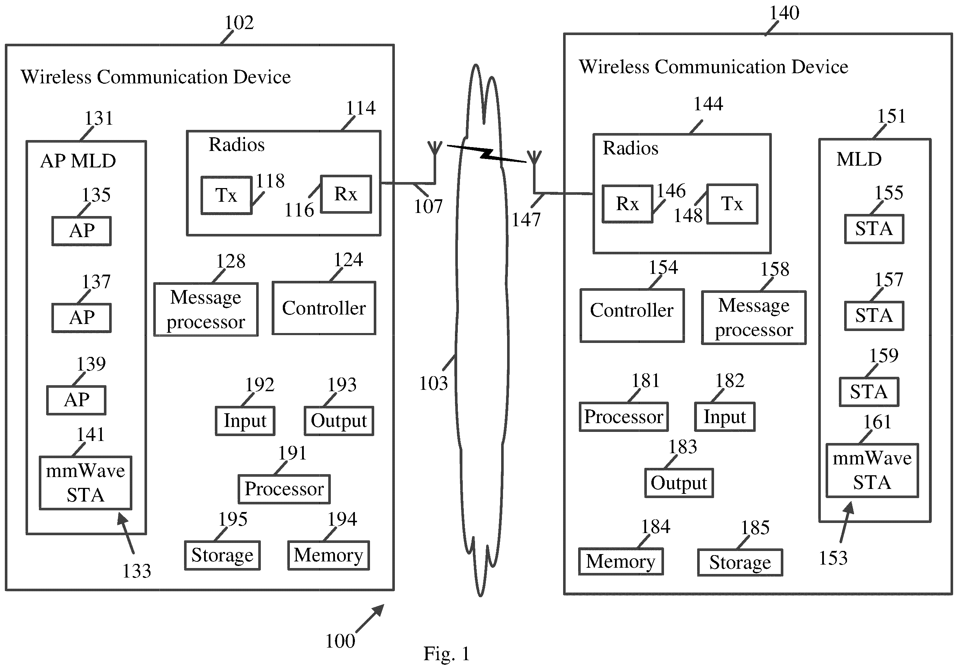

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102, and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10GHz wireless communication frequency band, for example, one or more channels in a sub-7GHz wireless communication frequency band, for example, one or more channels in a 2.4GHz wireless communication frequency band, one or more channels in a 5GHz wireless communication frequency band, and/or one or more channels in a 6GHz wireless communication frequency band. For example, WM 103 may additionally or alternatively include one or more channels in an mmWave wireless communication frequency band, for example, one or more channels in a frequency band above 40GHz, for example, one or more channels in a frequency band above 45GHz, e.g., one or more channels in a 60GHz frequency band, one or more channels in a frequency band between 42.5GHz and 71GHz, and/or one or more channels in any other mmWave frequency band.

In other aspects, WM 103 may include any other type of channel over any other frequency band.

In some demonstrative aspects, device 102 and/or device 140 may include one or more radios including circuitry and/or logic to perform wireless communication between devices 102, 140, and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a sub-10GHz band, for example, a sub-7GHz band, for example, a 2.4GHz band, a 5GHz band, a 6GHz band, and/or any other sub-10GHz and/or sub-7GHz band; and/or an mmWave band, e.g., a 45GHz band, a 60GHz band, a band between 42.5GHz and 71GHz, and/or any other mmWave band; and/or any other band, e.g., a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA, and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a Wi-Fi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of an Integrated mmWave (IMMW) STA.

In other aspects, for example, devices 102 and/or 140 may be configured to perform one or more operations, and/or functionalities of any other additional or alternative type of STA.

In other aspects, devices 102, and/or 140 may include, operate as, perform the role of, and/or perform one or more functionalities of, any other wireless device and/or station, e.g., a WLAN STA, a Wi-Fi STA, and the like.

In some demonstrative aspects, device 102 and/or device 140 may be configured to operate as, perform the role of, and/or perform one or more functionalities of, an access point (AP), e.g., an EHT AP STA, a UHR AP STA, and/or an IMMW AP STA.

In some demonstrative aspects, device 102 and/or device 140 may be configured to operate as, perform the role of, and/or perform one or more functionalities of, a non-AP STA, e.g., an EHT non-AP STA, a UHR non-AP STA, and/or an IMMW non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102 and/or 140 may be configured to communicate in an EHT network, a UHR network, an IMMW network, and/or any other network.

In some demonstrative aspects, devices 102, 140 and/or 150 may be configured to operate in accordance with one or more Specifications, for example, including one or more *IEEE 802.11 Specifications,* e.g., an *IEEE 802.11-2020 Specification,* an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to control, perform and/or to trigger, cause, instruct and/or control device 102 to operate as, perform a role of, and/or perform one or more operations and/or functionalities of, an AP MLD 131 including a plurality of STAs 133, e.g., including an AP STA 135, an AP STA 137, an AP STA 139, and/or an mmWave STA 141. In some aspects, as shown in Fig. 1, AP MLD 131 may include four STAs. In other aspects, AP MLD 131 may include any other number of STAs.

In one example, AP STA 135, AP STA 137, AP STA 139, and/or mmWave STA 141 may operate as, perform a role of, and/or perform one or more operations and/or functionalities of, an EHT AP STA. In other aspects, AP STA 135, AP STA 137, AP STA 139, and/or mmWave STA 141 may perform any other additional or alternative functionality.

In some demonstrative aspects, mmWave STA 141 may operate as, perform a role of, and/or perform one or more operations and/or functionalities of, an mmWave AP STA. In other aspects, mmWave STA 141 may operate as, perform a role of, and/or perform one or more operations and/or functionalities of an mmWave network controller to control communication over an mmWave wireless communication network.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, for example, the one or more radios 114 may include, for example, a radio for communication by mmWave STA 141 over a fourth wireless communication frequency channel and/or frequency band, e.g., an mmWave band, for example, a wireless communication band above 40GHz, for example, a frequency band above 45GHz, e.g., a 60GHz frequency band, a frequency band between 42.5GHz and 71GHz, and/or any other mmWave frequency band, e.g., as described below.

In some demonstrative aspects, the radios 114 utilized by STAs 133 may be implemented as separate radios. In other aspects, the radios 114 utilized by STAs 133 may be implemented by one or more shared and/or common radios and/or radio components.

In other aspects controller 124 may be configured to control, perform and/or to trigger, cause, instruct and/or control device 102 to operate as, perform a role of, and/or perform one or more operations and/or functionalities of, any other additional or alternative entity and/or STA, e.g., a single STA, multiple STAs, and/or a non-MLD entity.

In some demonstrative aspects, controller 154 may be configured to control, perform and/or to trigger, cause, instruct and/or control device 140 to operate as, perform a role of, and/or perform one or more operations and/or functionalities of, an MLD 151 including a plurality of STAs 153, e.g., including a STA 155, a STA 157, a STA 159, and/or a STA 161. In some aspects, as shown in Fig. 1, MLD 151 may include four STAs. In other aspects, MLD 151 may include any other number of STAs.

In one example, STA 155, STA 157, STA 159, and/or STA 161 may operate as, perform a role of, and/or perform one or more operations and/or functionalities of, an EHT STA. In other aspects, STA 155, STA 157, STA 159, and/or STA 161 may perform any other additional or alternative functionality.

In some demonstrative aspects, STA 161 may be configured to operate as, perform a role of, and/or perform one or more operations and/or functionalities of, an mmWave STA, e.g., as described below. For example, the mmWave STA 161 may be configured to operate as, perform a role of, and/or perform one or more operations and/or functionalities of, a non-AP mmWave STA, e.g., as described below.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, for example, the one or more radios 144 may include, for example, a radio for communication by mmWave STA 161 over a fourth wireless communication frequency channel and/or frequency band, e.g., an mmWave band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to control, perform and/or to trigger, cause, instruct and/or control MLD 151 to operate as, perform a role of, and/or perform one or more operations and/or functionalities of, a non-AP MLD. For example, STA 155, STA 157, STA 159, and/or mmWave STA 161 may operate as, perform a role of, and/or perform one or more operations and/or functionalities of, a non-AP STA, e.g., a non-AP EHT STA.

In some demonstrative aspects, controller 154 may be configured to control, perform and/or to trigger, cause, instruct and/or control MLD 151 to operate as, perform a role of, and/or perform one or more operations and/or functionalities of, an AP MLD. For example, STA 155, STA 157, STA 159, and/or mmWave STA 161 may operate as, perform a role of, and/or perform one or more operations and/or functionalities of, an AP EHT STA.

In other aspects controller 154 may be configured to control, perform and/or to trigger, cause, instruct and/or control device 140 to operate as, perform a role of, and/or perform one or more operations and/or functionalities of, any other additional or alternative entity and/or STA, e.g., a single STA, multiple STAs, and/or a non-MLD entity.

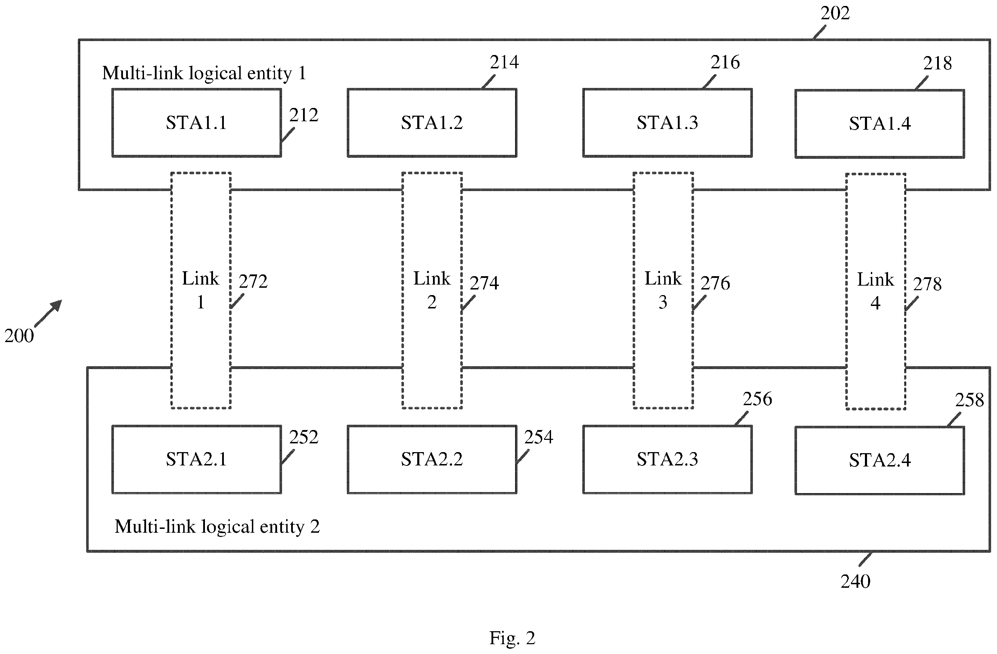

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, a STA 216, and a STA 218. In one example, AP MLD 131 (Fig. 1) may perform one or more operations of, one or more functionalities of, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, a STA 256, and a STA 258. In one example, MLD 151 (Fig. 1) may perform one or more operations of, one or more functionalities of, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, a link 276 between STA 216 and STA 256, and/or a link 278 between STA 218 and STA 258.

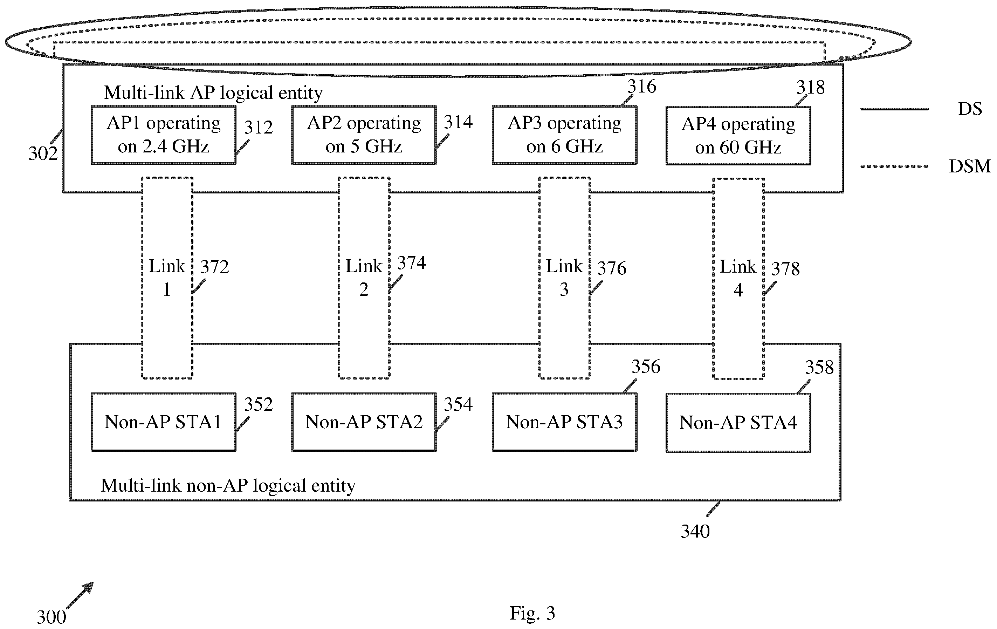

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, an AP STA 316, and an mmWave STA 318. In one example, AP MLD 131 (Fig. 1) may perform one or more operations of, one or more functionalities of, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, a non-AP STA 356, and an mmWave STA 358. In one example, MLD 151 (Fig. 1) may perform one or more operations of, one or more functionalities of, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, a link 376 between AP STA 316 and non-AP STA 356, and/or a link 378 between mmWave STA 318 and mmWave STA 358.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, AP STA 316 may be configured to communicate over a 6GHz frequency band, and/or mmWave STA 318 may be configured to communicate over an mmWave frequency band. In other aspects, AP STA 312, AP STA 314, AP STA 316, and/or mmWave STA 318 may be configured to communicate over any other additional or alternative wireless communication frequency bands.

Referring back to Fig. 1, in some demonstrative aspects, device 102 and/or device 140 may be configured to perform one or more operations of a wireless sensing technique, e.g., as describe below.

In some demonstrative aspects, "wireless sensing" (also referred to as "WLAN sensing" or "Wi-Fi sensing") may refer to a term given to a usage of wireless technology to detect changes in an environment of a device, e.g., an environment of device 102, for example, based on communicated wireless signals, e.g., signals communicated by device 102, for example, with one or more other devices, e.g., including device 140 and/or any other device, and/or signals communicated by device 102 with itself.

In some demonstrative aspects, the environment of the device may include an area around the device, e.g., within a few centimeters or meters from the device. The area may include a room, a house, an enterprise, and the like.

In some demonstrative aspects, WLAN sensing technology may utilize PHY and/or MAC features of a WLAN STA, e.g., an IEEE 802.11 station and/or any other type of wireless station, to obtain channel measurements that characterize the environment in which the station operates.

In some demonstrative aspects, measurements obtained with WLAN sensing may be used to enable and/or support applications such as, for example, presence detection, proximity detection, device-free positioning, gesture classification, among many others.

In one example, the wireless sensing may include performing radar-like applications. For example, wireless sensing may be used to detect motion in a room, for example, to detect when a person approaches a target device.

In some demonstrative aspects, the wireless sensing may be configured to detect one or more features in the environment, for example, a motion, a presence or proximity, a gesture, a people count, a geometry, a velocity, and/or the like.

In some demonstrative aspects, the wireless sensing may be configured to detect a target in the environment, for example, an object, a human, an animal, and/or the like.

In some demonstrative aspects, device 102 and/or device 140 may be configured to perform one or more operations of a wireless sensing mechanism, e.g., in accordance with an *IEEE 802.11bf Standard* and/or any other suitable wireless sensing protocol, standard and/or specification, e.g., as described below.

For example, the wireless sensing mechanism may be configured to use PHY and/or MAC features of one or more STAs, e.g., high-efficiency (HE) STAs, mmWave STAs, and/or EHT STAs, for example, to obtain measurements, which may be useful to estimate one or more features, e.g., range, velocity, and/or motion, of objects in an area of interest.

In some demonstrative aspects, the wireless sensing mechanism may be configured to provide a technical solution to use Wi-Fi technology to perform radar-like applications, such as detecting motion in a room, detecting when a person approaches a target device, and/or performing any other additional or alternative motion detection operations.

In some demonstrative aspects, the wireless sensing mechanism may be configured to provide a technical solution to perform sensing, for example, by tracking channel estimates obtained when decoding multiple Wi-Fi packets over time, and detecting variations that indicate an event of interest.

In some demonstrative aspects, the wireless sensing mechanism may be configured to utilize one or more measurement flows, for example, in accordance with an *IEEE 802.11bf Standard,* e.g., as described below.

In some demonstrative aspects, the wireless sensing mechanism may be configured according to a Trigger-based (TB) measurement flow, for example, in accordance with an *IEEE 802.11bf Standard.*

In other aspects, the wireless sensing mechanism may be configured according to a Non-Trigger-based (NTB) measurement flow, for example, in accordance with an *IEEE 802.11bf Standard.*

In some demonstrative aspects, TB sensing measurement exchanges may be configured to utilize an AP-centric sensing measurement mechanism, for example, in accordance with an *IEEE 802.11bf Standard.*

For example, the AP may perform one or more operations of, and/or the role of, a sensing initiator, which may be configured to initiate a sensing procedure, e.g., as described below.

In one example, an AP may perform one or more operations of a TB sensing measurement exchange, for example, to manage and/or schedule one or more sensing measurements between the AP and a STA.

In another example, an AP may perform one or more operations of a TB sensing measurement exchange, for example, to manage and/or schedule one or more sensing measurements between two or more STAs.

For example, the AP may initiate a TB sensing measurement exchange in accordance with a STA to STA sensing sounding mechanism, for example, a Sensing Responder to Sensing Responder (SR2SR) sensing sounding, e.g., in accordance with an *IEEE 802.11bf Standard.*

For example, the AP may schedule a first STA operating as a sensing transmitter to send sensing PPDUs to a second STA operating as a sensing receiver.

For example, a sensing initiator may include a STA, e.g., an HE STA and/or an EHT STA, that initiates a sensing procedure, for example, by transmitting a sensing measurement request frame, or a DMG STA that initiates a DMG sensing procedure by transmitting a DMG Sensing Measurement Request frame. The sensing initiator may perform any other additional or alternative operations, role, and/or functionality.

For example, a sensing responder may include a STA, e.g., an HE STA and/or an EHT STA, that participates in a sensing procedure, for example, by responding to a sensing initiator, or a DMG STA that participates in a DMG sensing procedure, for example, by responding to a sensing initiator. The sensing responder may perform any other additional or alternative operations, role, and/or functionality.

For example, a sensing transmitter may include a STA that transmits PPDUs used for measurements in a sensing procedure and/or in a DMG sensing procedure. The sensing transmitter may perform any other additional or alternative operations, role, and/or functionality.

For example, a sensing receiver may include a STA that is an intended recipient of PPDUs sent by a sensing transmitter to obtain sensing measurements, for example, in either a sensing procedure or a DMG sensing procedure. The sensing receiver may perform any other additional or alternative operations, role, and/or functionality.

In some demonstrative aspects, device 102 and/or device 140 may be configured to implement one or more operations and/or functionalities of a Multi-Link Operation (MLO) mechanism, which may be configured to support wireless communication over an mmWave link, e.g., as described below.

In some demonstrative aspects, device 102 and/or device 140 may be configured to implement one or more operations and/or functionalities of an MLO mechanism, which may be configured to provide a technical solution to support mmWave operation, e.g., operation at an mmWave band, together with, a sub-10GHz functionality, for example, according to a suitable mainstream Wi-Fi protocol, e.g., as described below.

In some demonstrative aspects, device 102 and/or device 140 may be configured to implement one or more operations and/or functionalities of an MLO mechanism, which may be configured to provide a technical solution to support reuse of at least some components of, e.g., as much as possible of, the same baseband, for communications by both a sub-10GHz radio, e.g., a regular Wi-Fi radio, and an mmWave radio, e.g., a 60GHz radio, e.g., as described below.

In some demonstrative aspects, device 102 and/or device 140 may be configured to implement one or more operations and/or functionalities of an MLO mechanism, which may be configured based on, and/or may utilize, a multi-link framework, for example, according to an MLD architecture, e.g., as described above.

In some demonstrative aspects, device 102 and/or device 140 may be configured to implement one or more operations and/or functionalities of an MLO mechanism, which may be configured to provide a technical solution to support an IMMW technology, for example, to define a Wi-Fi interface for communication over an mmWave band, e.g., as described below.

For example, the IMMW technology may be configured to provide a technical solution to reduce complexity, e.g., to a low complexity as possible, for example, by reusing in the mmWave band at least some, e.g., most, of a PHY PPDU structure and/or a PHY procedure as in a lower band, e.g., the sub-10GHz band.

For example, it may be defined, e.g., according to the IMMW technology, that a device may not be allowed to operate as an mmWave-only device.

For example, it may be defined, e.g., according to the IMMW technology, that an IMMW device, e.g., an IMMW STA, may be configured to support the use of an mmWave link in the mmWave band, for example, together with a sub-10GHz link in the sub-10GHz band, e.g., in the lower bands of 2.4GHz, 5GHz, and/or 6GHz.

For example, it may be defined, e.g., according to the IMMW technology, that an IMMW device, e.g., an IMMW STA, may be configured to support Multi-Link Operation (MLO), e.g., in accordance with an *IEEE 802.11be Specification.*

For example, it may be defined, e.g., according to the IMMW technology, that an IMMW device, e.g., an IMMW STA, may be configured to utilize the MLO, for example, to provide a technical solution to support significant reduction in complexity of an mmWave interface, for example, by using a link in a lower band, e.g., a sub-10GHz link, to support the mmWave link.

For example, it may be defined, e.g., according to the IMMW technology, that an IMMW device, e.g., an IMMW STA, may be configured to utilize communications over the sub-10GHz band, for example, for discovery, association, broadcast transmissions, or the like.

For example, it may be defined, e.g., according to the IMMW technology, that an IMMW device, e.g., an IMMW STA, may be configured to selectively restrict communications over the mmWave band based on one or more restrictions and/or conditions.

For example, it may be defined, e.g., according to the IMMW technology, that an IMMW device, e.g., an IMMW STA, may be configured to only use the mmWave link, e.g., when needed for data transmissions.

In some demonstrative aspects, device 102 and/or device 140 may be configured to implement one or more operations and/or functionalities of an MLO mechanism, which may be configured to support reduced power consumption for communication in an mmWave band. For example, the power consumption for communication in the mmWave band may be higher than a power consumption for communication in a lower band, e.g., a sub-10GHz band.

For example, the power consumption in the mmWave band may be reduced, for example, by limiting a listen time in the mmWave band, for example, by only waking up the mmWave link when really needed.

In some demonstrative aspects, device 102 and/or device 140 may be configured to implement one or more operations and/or functionalities of an MLO mechanism, which may be configured to provide a technical solution to support reduced power consumption for communication over an mmWave link, e.g., as described below.

In some demonstrative aspects, the MLO mechanism may be configured to support communication between associated STAs, for example, using at least one link in the sub-10GHz band, e.g., a 2.4GHz band, a 5GHz band, and/or a 6GHz band, and at least one link in the mmWave band, e.g., as described below.

In some demonstrative aspects, device 102 and/or device 140 may be configured to perform one or more operations and/or functionalities of a sensing measurement setup mechanism, which may be configured to support wireless sensing for IMMW STAs, e.g., as described below.

In some demonstrative aspects, the sensing measurement setup mechanism may be configured to provide a technical solution to support PHY and/or MAC protocols, which may be implemented by IMMW STAs, e.g., as described below.

For example, it may be defined, e.g., according to an IMMW technology, that an IMMW device, e.g., an IMMW STA, may be configured to utilize PHY and/or MAC protocols for mmWave bands, which may be different, for example, from PHY and/or MAC protocols utilized by mmWave STAs, for example, for mmWave sensing in accordance with the *IEEE 802.11bf Specification.*

For example, a new set of sensing protocols may be defined for IMMW, for example, in order to include sensing as part of an IMMW scope.

For example, the new set of sensing protocols for IMMW may be based on new IMMW PHY and/or MAC protocols, e.g., which may be different from the MAC and PHY protocols defined by the *IEEE 802.11ad Specification* and/or the *IEEE 802.11ay Specification.*

For example, the IMMW technology may be configured to reuse at least part of existing PHY and/or MAC protocols, which may be defined for sub-7GHz functionality.

In some demonstrative aspects, sensing protocols defined for sub-7GHz, e.g., in accordance with the *IEEE 802.11bf Specification,* may be reconfigured to be used over an mmWave band, e.g., as described below.

In some demonstrative aspects, device 102 and/or device 140 may be configured to perform one or more operations and/or functionalities of a monostatic sensing mechanism, which may be configured to support a monostatic sensing over an mmWave band, e.g., as described below.

In some demonstrative aspects, device 102 and/or device 140 may be configured to perform one or more operations and/or functionalities of a monostatic sensing mechanism, which may be configured to support a coordinated monostatic sensing over an mmWave band, e.g., as described below.

In some demonstrative aspects, the monostatic sensing mechanism may be configured to provide a technical solution to support monostatic and/or coordinated monostatic protocols, which may be implemented by IMMW STAs, e.g., as described below.

For example, a monostatic sensing and/or a coordinated monostatic sensing, e.g., in accordance with the *IEEE 802.11bf Specification,* may be a key feature supported in an mmWave band.

For example, a monostatic sensing and/or a coordinated monostatic sensing, e.g., in accordance with the *IEEE 802.11bf Specification,* may be based, for example, on PHY and/or MAC protocols defined by the *IEEE 802.11ad Specification* and/or the *IEEE 802.11ay Specification.*

For example, a monostatic sensing and/or a coordinated monostatic sensing, e.g., in accordance with the *IEEE 802.11bf Specification,* may not be supported in sub-7GHz band.

For example, it may be defined, e.g., according to an IMMW technology, that an IMMW device, e.g., an IMMW STA, may be configured to extend current sub-7GHz PHY and/or MAC protocols to an mmWave link.

For example, it may be defined, e.g., according to an IMMW technology, that an IMMW device, e.g., an IMMW STA, may be configured to utilize a sensing protocol, which may be different, for example, from a sensing protocol for DMG STAs in accordance with the *IEEE 802.11ad Specification* and/or the *IEEE 802.11ay Specification.*

For example, it may be defined, e.g., according to an IMMW technology, that an IMMW device, e.g., an IMMW STA, may be configured to utilize a sensing protocol, which may be configured to support a monostatic sensing, which enables a same set of features targeted for a monostatic sensing defined by the *IEEE 802.11bf Specification,* e.g., as described below.

In some demonstrative aspects, device 102 and/or device 140 may be configured to perform one or more operations and/or functionalities of a monostatic sensing mechanism, which may be configured to provide a technical solution to support a monostatic sensing, which may be implemented by IMMW STAs in an mmWave band, e.g., as described below.

For example, it may be defined, e.g., according to an IMMW technology, that an IMMW device, e.g., an IMMW STA, may be allowed to perform a monostatic sensing measurement in an mmWave link, for example, when the IMMW device has obtained a period of time in which it is allowed to transmit over the mmWave link.

For example, it may be defined, e.g., according to an IMMW technology, that whenever an IMMW STA obtains a Transmit Opportunity (TXOP) in an mmWave link, or whenever the IMMW STA is scheduled a period of time to transmit, the IMMW STA may be allowed to transmit one or more monostatic PPDUs to perform monostatic sensing.

For example, it may be defined, e.g., according to an IMMW technology, that as long as a STA, e.g., an IMMW STA, obtains a TXOP or is scheduled a period of time to transmit in the mmWave link, the STA can start transmitting monostatic sensing PPDUs, e.g., over the mmWave link.

In some demonstrative aspects, device 102 and/or device 140 may be configured to perform one or more operations and/or functionalities of a monostatic sensing mechanism, which may be configured to provide a technical solution to support communication of monostatic PPDUs over an mmWave band, e.g., as described below.

In some demonstrative aspects, it may be defined, e.g., according to an IMMW technology, that an IMMW device, e.g., an IMMW STA, may be configured to utilize one or more predefined types of PPDUs for the monostatic sensing over the mmWave band, e.g., as described below.

In some demonstrative aspects, it may be defined, e.g., according to an IMMW technology, that an IMMW device, e.g., an IMMW STA, may be allowed to use substantially any type PPDUs, which may be defined for IMMW STAs, as the monostatic sensing PPDUs.

In some demonstrative aspects, it may be defined, e.g., according to an IMMW technology, that an IMMW device, e.g., an IMMW STA, may be allowed to only use, e.g., may be restricted to only use, Null Data PPDUs (NDPs), as monostatic sensing PPDUs for IMMW.

In some demonstrative aspects, device 102 and/or device 140 may be configured to perform one or more operations and/or functionalities of a coordinated monostatic sensing mechanism, which may be configured to provide a technical solution to support a coordinated monostatic sensing in an mmWave link, for example, for IMMW, e.g., as described below.

In some demonstrative aspects, device 102 and/or device 140 may be configured to perform one or more operations and/or functionalities of a coordinated monostatic sensing mechanism, which may be configured to provide a technical solution to support a new coordinated monostatic sensing protocol, which may be configured to support one or more of, e.g., both of, sequential coordinated monostatic sensing for IMMW and/or in-parallel coordinated monostatic sensing for IMMW, e.g., as described below.

For example, the new coordinated monostatic sensing protocol may include a more simplified and/or predictable protocol, for example, compared to a coordinated monostatic sensing protocol, e.g., in accordance with the *IEEE 802. 11bf Specification,* which is highly dynamic and unpredictable.

In some demonstrative aspects, device 102 and/or device 140 may be configured to perform one or more operations and/or functionalities of a coordinated monostatic sensing mechanism, which may be configured to support various sensing applications in an mmWave band, for example, including application that rely on a monostatic sensing and/or a coordinated monostatic sensing.

For example, coordinated monostatic sensing mechanism may be configured to support a coordinated monostatic sensing protocol, which may be relatively simple and/or predictable in terms of scheduling for a sensing initiator STA to handle. This may be in contrast, for example, to a coordinated monostatic sensing protocol, e.g., in accordance with the *IEEE 802. 11bƒSpecification,* which may be highly dynamic and/or unpredictable, and/or which may require a sensing initiator STA to adjust the scheduling on the fly.

In some demonstrative aspects, device 102 and/or device 140 may be configured to perform one or more operations and/or functionalities of a coordinated monostatic mmWave sensing measurement exchange, e.g., as described below.

In some demonstrative aspects, controller 124 may be configured to control, trigger, cause, and/or instruct a sensing initiator STA implemented by device 102 to transmit one or more timeslot-scheduling frames over a sub-10GHz wireless communication frequency band, for example, to schedule one or more timeslots of a coordinated monostatic mmWave sensing measurement exchange for a plurality of sensing responder STAs, e.g., as described below.

In some demonstrative aspects, controller 124 may be configured to control, trigger, cause, and/or instruct the sensing initiator STA implemented by device 102 to transmit a trigger frame over an mmWave wireless communication frequency band during a timeslot of the one or more timeslots, e.g. as described below.

In some demonstrative aspects, controller 124 may be configured to control, trigger, cause, and/or instruct the sensing initiator STA implemented by device 102 to process a frame from a sensing responder STA to participate in a monostatic sounding during the timeslot, e.g., as described below.

In some demonstrative aspects, the frame from the sensing responder STA may include a frame received over the mmWave wireless communication frequency band during the timeslot, e.g., as described below.

In some demonstrative aspects, the sensing initiator STA may include an IMMW STA, e.g., as described below.

In some demonstrative aspects, the sensing initiator STA may include an AP, e.g., as described below.

In other aspects, the sensing initiator STA may include any other type of STA.

In some demonstrative aspects, the sub-10GHz wireless communication band may include a sub-7GHz wireless communication band, e.g., as described below.

In other aspects, the sub-10GHz wireless communication band may include any other sub-10GHz wireless communication band.

In some demonstrative aspects, the one or more timeslots may include one or more Target Wake Time (TWT) Service Periods (SPs), e.g., as described below.
In other aspects, the one or more timeslots may include any other type of timeslots.

In some demonstrative aspects, the trigger frame may include a basic trigger frame, e.g., as described below.

In other aspects, the trigger frame may include any other type of trigger frame.

In some demonstrative aspects, the frame from the sensing responder STA may include a Power Save (PS) poll frame, e.g., as described below.

In some demonstrative aspects, the frame from the sensing responder STA may include a Quality of Service (QoS) null frame, e.g., as described below.

In other aspects, the frame from the sensing responder STA may include any other type of frame.

In some demonstrative aspects, the one or more timeslot-scheduling frames may include a plurality of unsolicited TWT responses addressed to the plurality of sensing responder STAs, respectively, e.g., as described below.

In some demonstrative aspects, the one or more timeslot-scheduling frames may include a broadcast TWT frame, for example, to invite the plurality of sensing responder STAs to become members of a broadcast TWT, e.g., as described below.

In other aspects, the one or more timeslot-scheduling frames may include any other type of frames.

In some demonstrative aspects, the one or more timeslots may include one or more sensing availability windows for one or more scheduled TB sensing measurement exchanges, e.g., as described below.

In some demonstrative aspects, the trigger frame may include a sensing polling trigger frame, e.g., as described below.

In other aspects, the trigger frame may include any other type of trigger frame.

In some demonstrative aspects, the frame from the sensing responder STA may include a Clear to Send to self (CTS-to-self) frame, e.g., as described below.

In other aspects, the frame from the sensing responder STA may include any other type of frame.

In some demonstrative aspects, the one or more timeslot-scheduling frames may include a plurality of sensing measurement requests addressed to the plurality of sensing responder STAs, respectively, e.g., as described below.

In some demonstrative aspects, controller 124 may be configured to control, trigger, cause, and/or instruct the sensing initiator STA implemented by device 102 to set a configuration of the monostatic sounding for the sensing responder STA, e.g., as described below.

In some demonstrative aspects, the configuration of the monostatic sounding for the sensing responder STA may include a count of beams to be swept by the sensing responder STA during the monostatic sounding, e.g., as described below.

In some demonstrative aspects, the configuration of the monostatic sounding for the sensing responder STA may include a count of repetitions per beam during the monostatic sounding, e.g., as described below.

**In** other aspects, the configuration of the monostatic sounding for the sensing responder STA may include a configuration of any other additional or alternative parameter corresponding to the monostatic sounding to be performed by the sensing responder STA.

**In** some demonstrative aspects, controller 124 may be configured to control, trigger, cause, and/or instruct the sensing initiator STA implemented by device 102 to transmit to the sensing responder STA a sensing measurement request frame over the sub-10GHz wireless communication band, e.g., as described below.

**In** some demonstrative aspects, the sensing measurement request frame may be configured to set the configuration of the monostatic sounding for the sensing responder STA, e.g., as described below.

**In** some demonstrative aspects, the sensing measurement request frame may be configured to set the count of beams, and/or the count of repetitions per beam for the sensing responder STA, e.g., as described below.

**In** some demonstrative aspects, controller 124 may be configured to control, trigger, cause, and/or instruct the sensing initiator STA implemented by device 102 to transmit the sensing measurement request frame, for example, prior to the one or more timeslot-scheduling frames, e.g., as described below.

**In** some demonstrative aspects, controller 124 may be configured to control, trigger, cause, and/or instruct the sensing initiator STA implemented by device 102 to process one or more measurement reports received from one or more sensing responder STAs over the sub-10GHz wireless communication frequency band, e.g., as described below.

In some demonstrative aspects, the one or more measurement reports may include a measurement report received from the sensing responder STA over the sub-10GHz wireless communication frequency band after the timeslot, e.g., as described below.

In some demonstrative aspects, the coordinated monostatic mmWave sensing measurement exchange may include a sequential coordinated monostatic mmWave sensing measurement exchange, e.g., as described below.

In some demonstrative aspects, the one or more timeslots may include a sequence of non-overlapping timeslots, e.g., as described below.

In some demonstrative aspects, the sequence of non-overlapping timeslots may include a first timeslot for a first sensing responder STA, e.g., as described below.

In some demonstrative aspects, the sequence of non-overlapping timeslots may include a second timeslot, for example, after the first timeslot, for a second sensing responder STA, e.g., as described below.

In some demonstrative aspects, controller 124 may be configured to control, trigger, cause, and/or instruct the sensing initiator STA implemented by device 102 to configure a duration of the first timeslot, for example, based on a configuration of a first monostatic sounding for the first sensing responder STA, e.g., as described below.

In some demonstrative aspects, controller 124 may be configured to control, trigger, cause, and/or instruct the sensing initiator STA implemented by device 102 to configure a duration of the second timeslot, for example, based on a configuration of a second monostatic sounding for the second sensing responder STA, e.g., as described below.

In some demonstrative aspects, controller 124 may be configured to control, trigger, cause, and/or instruct the sensing initiator STA implemented by device 102 to set the configuration of the first monostatic sounding for the first sensing responder STA, for example, based on a measurement session negotiation with the first sensing responder STA, e.g., as described below.

In some demonstrative aspects, controller 124 may be configured to control, trigger, cause, and/or instruct the sensing initiator STA implemented by device 102 to set the configuration of the second monostatic sounding for the second sensing responder STA, for example, based on a measurement session negotiation with the second sensing responder STA, e.g., as described below.

In some demonstrative aspects, controller 124 may be configured to control, trigger, cause, and/or instruct the sensing initiator STA implemented by device 102 to set a same first configuration of the first monostatic sounding for the first sensing responder STA for all coordinated monostatic mmWave sensing measurement exchanges of a measurement session, e.g., as described below.

In some demonstrative aspects, controller 124 may be configured to control, trigger, cause, and/or instruct the sensing initiator STA implemented by device 102 to set a same second configuration of the second monostatic sounding for the second sensing responder STA for all the coordinated monostatic mmWave sensing measurement exchanges of the measurement session, e.g., as described below.

In some demonstrative aspects, controller 124 may be configured to control, trigger, cause, and/or instruct the sensing initiator STA implemented by device 102 to set the configuration of the first monostatic sounding for the first sensing responder STA, e.g., as described below.

In some demonstrative aspects, the configuration of the first monostatic sounding for the first sensing responder STA may include a first count of beams to be swept by the first sensing responder STA during the first monostatic sounding, e.g., as described below.

In some demonstrative aspects, the configuration of the first monostatic sounding for the first sensing responder STA may include a first count of repetitions per beam during the first monostatic sounding, e.g., as described below.

In some demonstrative aspects, controller 124 may be configured to control, trigger, cause, and/or instruct the sensing initiator STA implemented by device 102 to set the configuration of the second monostatic sounding for the second sensing responder STA, e.g., as described below.

In some demonstrative aspects, the configuration of the second monostatic sounding for the second sensing responder STA may include a second count of beams to be swept by the second sensing responder STA during the second monostatic sounding, e.g., as described below.

In some demonstrative aspects, the configuration of the second monostatic sounding for the second sensing responder STA may include a second count of repetitions per beam during the second monostatic sounding, e.g., as described below.

In some demonstrative aspects, controller 124 may be configured to control, trigger, cause, and/or instruct the sensing initiator STA implemented by device 102 to transmit to the first sensing responder STA a first sensing measurement request frame over the sub-10GHz wireless communication band, e.g., as described below.

In some demonstrative aspects, the first sensing measurement request frame may be configured to set the first count of beams and/or the first count of repetitions per beam, e.g., as described below.

In some demonstrative aspects, controller 124 may be configured to control, trigger, cause, and/or instruct the sensing initiator STA implemented by device 102 to transmit to the second sensing responder STA a second sensing measurement request frame over the sub-10GHz wireless communication band, e.g., as described below.

In some demonstrative aspects, the second sensing measurement request frame may be configured to set the second count of beams and/or the second count of repetitions per beam, e.g., as described below.

In some demonstrative aspects, controller 124 may be configured to control, trigger, cause, and/or instruct the sensing initiator STA implemented by device 102 to transmit the first sensing measurement request frame and/or the second sensing measurement request frame, for example, prior to the one or more timeslot-scheduling frames, e.g., as described below.

In some demonstrative aspects, controller 124 may be configured to control, trigger, cause, and/or instruct the sensing initiator STA implemented by device 102 to transmit a first trigger frame to the first sensing responder STA over the mmWave wireless communication frequency band during the first timeslot, e.g., as described below.

In some demonstrative aspects, controller 124 may be configured to control, trigger, cause, and/or instruct the sensing initiator STA implemented by device 102 to process a first frame received from the first sensing responder STA over the mmWave wireless communication frequency band during the first timeslot, e.g., as described below.

In some demonstrative aspects, the first frame received from the first sensing responder STA may include a frame received in response to the first trigger frame, e.g., as described below.

In some demonstrative aspects, controller 124 may be configured to control, trigger, cause, and/or instruct the sensing initiator STA implemented by device 102 to transmit a second trigger frame to the second sensing responder STA over the mmWave wireless communication frequency band during the second timeslot, e.g., as described below.

In some demonstrative aspects, controller 124 may be configured to control, trigger, cause, and/or instruct the sensing initiator STA implemented by device 102 to process a second frame received from the second sensing responder STA over the mmWave wireless communication frequency band during the second timeslot, e.g., as described below.

In some demonstrative aspects, the second frame received from the second sensing responder STA may include a frame received in response to the second trigger frame, e.g., as described below.

In some demonstrative aspects, controller 124 may be configured to control, trigger, cause, and/or instruct the sensing initiator STA implemented by device 102 to transmit a first sensing trigger frame to the first sensing responder STA, for example, based on the first frame received from the first sensing responder STA, e.g., as described below.

In some demonstrative aspects, the first sensing trigger frame may be configured to trigger a first monostatic sounding for the first sensing responder STA during the first timeslot, e.g., as described below.

In some demonstrative aspects, controller 124 may be configured to control, trigger, cause, and/or instruct the sensing initiator STA implemented by device 102 to transmit a second sensing trigger frame to the second sensing responder STA, for example, based on the second frame received from the second sensing responder STA, e.g., as described below.

In some demonstrative aspects, the second sensing trigger frame may be configured to trigger a second monostatic sounding for the second sensing responder STA during the second timeslot, e.g., as described below.

In some demonstrative aspects, controller 124 may be configured to control, trigger, cause, and/or instruct the sensing initiator STA implemented by device 102 to process a first measurement report from the first sensing responder STA, for example, to identify first measurement information corresponding to a first monostatic sounding during the first timeslot, e.g., as described below.

In some demonstrative aspects, the first measurement report may include a report received from the first sensing responder STA over the sub-10GHz wireless communication band, for example, after the first timeslot, e.g., as described below.

In some demonstrative aspects, controller 124 may be configured to control, trigger, cause, and/or instruct the sensing initiator STA implemented by device 102 to process a second measurement report from the second sensing responder STA, for example, to identify second measurement information corresponding to a second monostatic sounding during the second timeslot, e.g., as described below.

In some demonstrative aspects, the second measurement report may include a report received from the second sensing responder STA over the sub-10GHz wireless communication band, for example, after the second timeslot, e.g., as described below.

In some demonstrative aspects, controller 124 may be configured to control, trigger, cause, and/or instruct the sensing initiator STA implemented by device 102 to transmit a first reporting trigger frame to the first sensing responder STA over the sub-10GHz wireless communication band, for example, after the first timeslot, e.g., as described below.

In some demonstrative aspects, the first reporting trigger frame may be configured to solicit the first sensing responder STA, for example, to transmit the first measurement report, e.g., as described below.

In some demonstrative aspects, controller 124 may be configured to control, trigger, cause, and/or instruct the sensing initiator STA implemented by device 102 to transmit a second reporting trigger frame to the second sensing responder STA over the sub-10GHz wireless communication band, for example, after the second timeslot, e.g., as described below.

In some demonstrative aspects, the second reporting trigger frame may be configured to solicit the second sensing responder STA, for example, to transmit the second measurement report, e.g., as described below.

In some demonstrative aspects, the sequence of non-overlapping timeslots may include a first sequence of periodic timeslots for the first sensing responder STA, e.g., as described below.

In some demonstrative aspects, the sequence of non-overlapping timeslots may include a second sequence of periodic timeslots for the second sensing responder STA, e.g., as described below.

In some demonstrative aspects, the coordinated monostatic mmWave sensing measurement exchange may include a parallel coordinated monostatic mmWave sensing measurement exchange, e.g., as described below.

In some demonstrative aspects, the one or more timeslots scheduled by the sensing initiator STA may include a parallel-sounding timeslot for parallel monostatic sounding, e.g., as described below.

In some demonstrative aspects, the parallel-sounding timeslot for the parallel monostatic sounding may include a first monostatic sounding for a first sensing responder STA during a first time period, e.g., as described below.

In some demonstrative aspects, parallel-sounding timeslot for the parallel monostatic sounding may include a second monostatic sounding for a second sensing responder STA during a second time period, e.g., as described below.

In some demonstrative aspects, the second time period may at least partially overlap with the first time period, e.g., as described below.

In some demonstrative aspects, controller 124 may be configured to control, trigger, cause, and/or instruct the sensing initiator STA implemented by device 102 to configure a duration of the parallel-sounding timeslot, for example, based on a configuration of the first monostatic sounding for the first sensing responder STA, and/or a configuration of the second monostatic sounding for the second sensing responder STA, e.g., as described below.

In some demonstrative aspects, controller 124 may be configured to control, trigger, cause, and/or instruct the sensing initiator STA implemented by device 102 to configure the duration of the parallel-sounding timeslot, for example, based on a first duration of the first monostatic sounding for the first sensing responder STA, and/or based on a second duration of the second monostatic sounding for the second sensing responder STA, e.g., as described below.

In some demonstrative aspects, controller 124 may be configured to control, trigger, cause, and/or instruct the sensing initiator STA implemented by device 102 to configure the duration of the parallel-sounding timeslot, for example, based on a maximal monostatic sounding duration for the parallel-sounding timeslot, e.g., as described below.

**In** some demonstrative aspects, the maximal monostatic sounding duration may correspond, for example, to a longest monostatic sounding of any sensing responder STA to participate in the parallel-sounding timeslot, e.g., as described below.

**In** other aspects, the duration of the parallel-sounding timeslot may be configured based on any other parameters and/or criteria.

**In** some demonstrative aspects, controller 124 may be configured to control, trigger, cause, and/or instruct the sensing initiator STA implemented by device 102 to set the configuration of the first monostatic sounding for the first sensing responder STA, for example, based on a measurement session negotiation with the first sensing responder STA, e.g., as described below.

In some demonstrative aspects, controller 124 may be configured to control, trigger, cause, and/or instruct the sensing initiator STA implemented by device 102 to set the configuration of the second monostatic sounding for the second sensing responder STA, for example, based on a measurement session negotiation with the second sensing responder STA, e.g., as described below.

In some demonstrative aspects, controller 124 may be configured to control, trigger, cause, and/or instruct the sensing initiator STA implemented by device 102 to set a same first configuration of the first monostatic sounding for the first sensing responder STA, for example, for all coordinated monostatic mmWave sensing measurement exchanges of a measurement session, e.g., as described below.

In some demonstrative aspects, controller 124 may be configured to control, trigger, cause, and/or instruct the sensing initiator STA implemented by device 102 to set a same second configuration of the second monostatic sounding for the second sensing responder STA, for example, for all the coordinated monostatic mmWave sensing measurement exchanges of the measurement session, e.g., as described below.

In some demonstrative aspects, controller 124 may be configured to control, trigger, cause, and/or instruct the sensing initiator STA implemented by device 102 to set the configuration of the first monostatic sounding for the first sensing responder STA, e.g., as described below.

In some demonstrative aspects, the configuration of the first monostatic sounding for the first sensing responder STA may include a first count of beams to be swept by the first sensing responder STA during the first monostatic sounding, e.g., as described below.

In some demonstrative aspects, the configuration of the first monostatic sounding for the first sensing responder STA may include a first count of repetitions per beam during the first monostatic sounding, e.g., as described below.

In some demonstrative aspects, controller 124 may be configured to control, trigger, cause, and/or instruct the sensing initiator STA implemented by device 102 to set the configuration of the second monostatic sounding for the second sensing responder STA, e.g., as described below.

In some demonstrative aspects, the configuration of the second monostatic sounding for the second sensing responder STA may include a second count of beams to be swept by the second sensing responder STA during the second monostatic sounding, e.g., as described below.

In some demonstrative aspects, the configuration of the second monostatic sounding for the second sensing responder STA may include a second count of repetitions per beam during the second monostatic sounding, e.g., as described below.

In some demonstrative aspects, controller 124 may be configured to control, trigger, cause, and/or instruct the sensing initiator STA implemented by device 102 to transmit to the first sensing responder STA a first sensing measurement request frame over the sub-10GHz wireless communication band, e.g., as described below.

In some demonstrative aspects, the first sensing measurement request frame may be configured to set the first count of beams, the first count of repetitions per beam, and/or any other additional or alternative parameter, e.g., as described below.

In some demonstrative aspects, controller 124 may be configured to control, trigger, cause, and/or instruct the sensing initiator STA implemented by device 102 to transmit to the second sensing responder STA a second sensing measurement request frame over the sub-10GHz wireless communication band, e.g., as described below.

In some demonstrative aspects, the second sensing measurement request frame may be configured to set the second count of beams, the second count of repetitions per beam, and/or any other additional or alternative parameter, e.g., as described below.

**In** some demonstrative aspects, controller 124 may be configured to control, trigger, cause, and/or instruct the sensing initiator STA implemented by device 102 to transmit the first sensing measurement request frame and/or the second sensing measurement request frame, for example, prior to the one or more timeslot-scheduling frames, e.g., as described below.

**In** some demonstrative aspects, controller 124 may be configured to control, trigger, cause, and/or instruct the sensing initiator STA implemented by device 102 to transmit a trigger frame to the first sensing responder STA and the second sensing responder STA over the mmWave wireless communication frequency band, for example, during the parallel-sounding timeslot, e.g., as described below.

In some demonstrative aspects, controller 124 may be configured to control, trigger, cause, and/or instruct the sensing initiator STA implemented by device 102 to process a first frame received from the first sensing responder STA over the mmWave wireless communication frequency band, for example, during the parallel-sounding timeslot, e.g., as described below.

In some demonstrative aspects, the first frame received from the first sensing responder STA may include a frame received in response to the trigger frame, e.g., as described below.

In some demonstrative aspects, controller 124 may be configured to control, trigger, cause, and/or instruct the sensing initiator STA implemented by device 102 to process a second frame received from the second sensing responder STA over the mmWave wireless communication frequency band, for example, during the parallel-sounding timeslot, e.g., as described below.

In some demonstrative aspects, the second frame received from the second sensing responder STA may include a frame received in response to the trigger frame, e.g., as described below.

In some demonstrative aspects, controller 124 may be configured to control, trigger, cause, and/or instruct the sensing initiator STA implemented by device 102 to transmit a sensing trigger frame to the first sensing responder STA and the second sensing responder STA, for example, based on the first frame received from the first sensing responder STA and the second frame received from the second sensing responder STA, e.g., as described below.

In some demonstrative aspects, the sensing trigger frame may trigger the first monostatic sounding for the first sensing responder STA, and the second monostatic sounding for the second sensing responder STA, e.g., as described below.

In some demonstrative aspects, controller 124 may be configured to control, trigger, cause, and/or instruct the sensing initiator STA implemented by device 102 to process a first measurement report from the first sensing responder STA to identify first measurement information corresponding to the first monostatic sounding, e.g., as described below.

In some demonstrative aspects, the first measurement report may include a report received from the first sensing responder STA over the sub-10GHz wireless communication band, for example, after the parallel-sounding timeslot, e.g., as described below.

In some demonstrative aspects, controller 124 may be configured to control, trigger, cause, and/or instruct the sensing initiator STA implemented by device 102 to process a second measurement report from the second sensing responder STA to identify second measurement information corresponding to the second monostatic sounding, e.g., as described below.

In some demonstrative aspects, the second measurement report may include a report received from the second sensing responder STA over the sub-10GHz wireless communication band, for example, after the parallel-sounding timeslot, e.g., as described below.

In some demonstrative aspects, controller 124 may be configured to control, trigger, cause, and/or instruct the sensing initiator STA implemented by device 102 to transmit a reporting trigger frame to the first sensing responder STA and to the second sensing responder STA over the sub-10GHz wireless communication band, for example, after the parallel-sounding timeslot, e.g., as described below.

In some demonstrative aspects, the reporting trigger frame may be configured to solicit the first sensing responder STA to transmit the first measurement report, e.g., as described below.

In some demonstrative aspects, the reporting trigger frame may be configured to solicit the second sensing responder STA to transmit the second measurement report, e.g., as described below.

In some demonstrative aspects, controller 154 may be configured to control, trigger, cause, and/or instruct a sensing responder STA implemented by device 140 to process a timeslot-scheduling frame received from a sensing initiator STA over a sub-10GHz wireless communication frequency band, for example, to identify a timeslot for the sensing responder STA in a coordinated monostatic mmWave sensing measurement exchange for a plurality of sensing responder STAs, e.g., as described below.

For example, the received timeslot-scheduling frame, which is received by the sensing responder STA implemented by device 140, may include the timeslot-scheduling frame transmitted from the sensing initiator STA implemented by device 102.

In some demonstrative aspects, controller 154 may be configured to control, trigger, cause, and/or instruct the sensing responder STA implemented by device 140 to process a trigger frame received from the sensing initiator STA over an mmWave wireless communication frequency band during the timeslot, e.g., as described below.

For example, the received trigger frame, which is received by the sensing responder STA implemented by device 140, may include the trigger frame transmitted from the sensing initiator STA implemented by device 102.

In some demonstrative aspects, controller 154 may be configured to control, trigger, cause, and/or instruct the sensing responder STA implemented by device 140 to transmit a frame from the sensing responder STA to the sensing initiator STA over the mmWave wireless communication frequency band during the timeslot, e.g., as described below.

In some demonstrative aspects, the frame from the sensing responder STA may include a frame in response to the trigger frame, e.g., as described below.

In some demonstrative aspects, controller 154 may be configured to control, trigger, cause, and/or instruct the sensing responder STA implemented by device 140 to perform a monostatic sounding during the timeslot, e.g., as described below.

In some demonstrative aspects, the monostatic sounding may include transmission of one or more monostatic sensing PPDUs from the sensing responder STA over the mmWave wireless communication frequency band, e.g., as described below.

In some demonstrative aspects, the monostatic sounding may include determination of measurement information, for example, based on reception of the one or more monostatic sensing PPDUs at the sensing responder STA, e.g., as described below.

In other aspects, the monostatic sounding may include any other additional or alternative operations.

In some demonstrative aspects, the sensing responder STA may include an IMMW STA.

In some demonstrative aspects, the sensing responder STA may include a non-AP STA.

In other aspects, the sensing responder STA may include any other type of STA.

In some demonstrative aspects, the sub-10GHz wireless communication band may include a sub-7GHz wireless communication band, e.g., as described below.

In other aspects, the sub-10GHz wireless communication band may include any other sub-10GHz wireless communication band.

In some demonstrative aspects, the timeslot may include a TWT SP, e.g., as described below.

In other aspects, the timeslot may include any other type of timeslot.

In some demonstrative aspects, the trigger frame may include a basic trigger frame, e.g., as described below.

In other aspects, the trigger frame may include any other type of trigger frame.

In some demonstrative aspects, the frame from the sensing responder STA may include a PS poll frame, e.g., as described below.

In some demonstrative aspects, the frame from the sensing responder STA may include a QoS null frame, e.g., as described below.

In other aspects, the frame from the sensing responder STA may include any other type of frame.

In some demonstrative aspects, the timeslot-scheduling frame may include an unsolicited TWT response addressed to the sensing responder STA, e.g., as described below.

In some demonstrative aspects, the timeslot-scheduling frame may include a broadcast TWT frame to invite the plurality of sensing responder STAs to become members of a broadcast TWT, e.g., as described below.

In other aspects, the timeslot-scheduling frame may include any other type of frame.

In some demonstrative aspects, the timeslot may include a sensing availability window for a scheduled TB sensing measurement exchange, e.g., as described below.

In other aspects, the timeslot may include any other type of timeslot.

In some demonstrative aspects, the trigger frame may include a sensing polling trigger frame, e.g., as described below.

In other aspects, the trigger frame may include any other type of trigger frame.

In some demonstrative aspects, the frame from the sensing responder STA may include a CTS-to-self frame, e.g., as described below.

In other aspects, the frame from the sensing responder STA may include any other type of frame.

In some demonstrative aspects, the timeslot-scheduling frame may include a sensing measurement request addressed to the sensing responder STA, e.g., as described below.

In some demonstrative aspects, the coordinated monostatic mmWave sensing measurement exchange may include a sequential coordinated monostatic mmWave sensing measurement exchange, e.g., as described below.

In some demonstrative aspects, the coordinated monostatic mmWave sensing measurement exchange may include a parallel coordinated monostatic mmWave sensing measurement exchange, e.g., as described below.

In some demonstrative aspects, the one or more timeslots may include a parallel-sounding timeslot for parallel monostatic sounding, e.g., as described below.

In some demonstrative aspects, the one or more timeslots for the parallel monostatic sounding may include a first monostatic sounding for a first sensing responder STA during a first time period, e.g., as described below.

In some demonstrative aspects, the one or more timeslots for the parallel monostatic sounding may include a second monostatic sounding for a second sensing responder STA during a second time period, for example, at least partially overlapping the first time period, e.g., as described below.

In some demonstrative aspects, controller 154 may be configured to control, trigger, cause, and/or instruct the sensing responder STA implemented by device 140 to determine a configuration of the monostatic sounding for the sensing responder STA, for example, based on a measurement session negotiation with the sensing initiator STA, e.g., as described below.

In some demonstrative aspects, controller 154 may be configured to control, trigger, cause, and/or instruct the sensing responder STA implemented by device 140 to determine a same configuration of the monostatic sounding for the sensing responder STA for all coordinated monostatic mmWave sensing measurement exchanges of a measurement session, e.g., as described below.

In some demonstrative aspects, controller 154 may be configured to control, trigger, cause, and/or instruct the sensing responder STA implemented by device 140 to determine the configuration of the monostatic sounding for the sensing responder STA, e.g., as described below.

In some demonstrative aspects, the configuration of the monostatic sounding for the sensing responder STA may include a count of beams to be swept by the sensing responder STA during the monostatic sounding, e.g., as described below.

In some demonstrative aspects, the configuration of the monostatic sounding for the sensing responder STA may include a count of repetitions per beam during the monostatic sounding, e.g., as described below.

In other aspects, the configuration of the monostatic sounding for the sensing responder STA may include any other additional or alternative parameters.

In some demonstrative aspects, controller 154 may be configured to control, trigger, cause, and/or instruct the sensing responder STA implemented by device 140 to process a sensing measurement request frame received from the sensing initiator STA over the sub-10GHz wireless communication band, for example, to identify a setting of the count of beams and/or the count of repetitions per beam, e.g., as described below.

In some demonstrative aspects, controller 154 may be configured to control, trigger, cause, and/or instruct the sensing responder STA implemented by device 140 to process the sensing measurement request frame, for example, prior to receipt of the timeslot-scheduling frame, e.g., as described below.

In some demonstrative aspects, controller 154 may be configured to control, trigger, cause, and/or instruct the sensing responder STA implemented by device 140 to perform the monostatic sounding, for example, based on a sensing trigger frame from the sensing initiator STA, e.g., as described below.

In some demonstrative aspects, controller 154 may be configured to control, trigger, cause, and/or instruct the sensing responder STA implemented by device 140 to transmit a measurement report to the sensing initiator STA over the sub-10GHz wireless communication band, for example, after the timeslot, e.g., as described below.

In some demonstrative aspects, the measurement report may include the measurement information, e.g., as described below.

In some demonstrative aspects, controller 154 may be configured to control, trigger, cause, and/or instruct the sensing responder STA implemented by device 140 to transmit the measurement report, for example, based on a reporting trigger frame received from the sensing initiator STA over the sub-10GHz wireless communication band, for example, after the timeslot, e.g., as described below.

In some demonstrative aspects, device 102 and/or device 140 may be configured to perform one or more operations and/or functionalities of a monostatic sensing mechanism, which may be configured to support a coordinated monostatic sensing, for example, using a TWT mechanism, e.g., as described below.

In some demonstrative aspects, it may be defined that a sensing initiator STA, e.g., which is implemented, by an AP, is to use TWT to schedule periodic TWT SPs for sensing responder STAs, for example, to perform coordinated monostatic sensing, e.g., as described below.

In some demonstrative aspects, device 102 and/or device 140 may be configured to perform one or more operations and/or functionalities of a monostatic sensing mechanism, which may be configured to support a coordinated monostatic sensing at a sequential mode, e.g., as described below.

In some demonstrative aspects, it may be defined that a sensing initiator STA, e.g., a STA implemented by device 102, is to schedule periodic TWT SPs for multiple, sensing responder STAs, e.g., as described below.

In some demonstrative aspects, it may be defined that the sensing initiator STA is to make sure that different sensing responder STAs are scheduled within different non-overlapping TWT SPs, for example, for the coordinated monostatic sensing at the sequential mode, e.g., as described below.

In some demonstrative aspects, it may be defined that the scheduling of the TWT SPs, which are to be in an mmWave link, is to be performed over the sub-7Ghz link.

For example, it may be defined that the sensing initiator STA is to communicate with the sensing responder STAs over the sub-7GHz link in order to schedule the TWT SPs for the coordinated monostatic sensing at the sequential mode over the mmWave link.

For example, it may be defined that the sensing initiator STA is to schedule the TWT SPs, which are to be in an mmWave link, over the sub-7GHz link, for example, using a cross-link TWT mechanism, for example, in accordance with the *IEEE 802.11be Specification,* e.g., as described below.

In some demonstrative aspects, device 102 and/or device 140 may be configured to perform one or more operations and/or functionalities of a static allocation mechanism, which may support static allocation of time periods for the sensing responder STAs, for example, suing the TWT SPs, e.g., as described below.

For example, the static allocation mechanism may be configured to include a static and predictable time allocation for a coordinated monostatic sensing, for example, based on a setting that for a sensing responder STA, a plurality of TWT SPs, e.g., each TWT SP, may be of a same duration.

For example, the coordinated monostatic sensing at the sequential mode may be configured to provide a technical solution, for example, to ensure a feasibility of a static and predictable scheduling for an IMMW.

For example, the coordinated monostatic sensing at the sequential mode may be configured to provide a technical solution, for example, to avoid a dynamic time allocation, for example, of a coordinated monostatic sensing protocol in accordance with the *IEEE 802.11bf Specification.*

In some demonstrative aspects, it may be defined, for example, that during a sensing measurement session negotiation and/or setup phase, the sensing initiator STA is to request an *i-th* sensing responder STA to sweep, e.g., to always sweep, the same number of beams for the *i-th* sensing responder STA, denoted *Mᵢ*, in a plurality of TWT SPs, e.g., in each TWT SP.

In some demonstrative aspects, it may be defined, for example, that the beams, e.g., each beam, is to be repeated the same number of times, denoted *Nᵢ*.

For example, the parameters *Mᵢ* and *Nᵢ* may be fixed and/or determined after the sensing measurement session negotiation and/or setup process for one or more, e.g., each, sensing responder STA *i*.

For example, it may be defined that during the sensing measurement session negotiation and setup phase, the sensing initiator is to request a sensing responder *i* to always sweep the same number of beams *M_i* in each TWT SP, and that each beam is to be repeated the same number of times *N_i.*

For example, it may be defined that the values of *M*_*i* and *N_i* are to be fixed and determined after the sensing measurement session negotiation and setup process for each responder *i*.

For example, this definition of the static setting of the number *Mᵢ* of beams and the number *Nᵢ* of repetitions per beam for the sensing responder STA *i* may be implemented, for example, to provide a technical solution to avoid a dynamic time allocation, for example, according to a scheduling mechanism defined by the *IEEE 802.11bf.*

In some demonstrative aspects, it may be defined that the sensing initiator STA is to inform a sensing responder STA of indices of beams it expects the sensing responder STA to sweep, for example, during the whole process, e.g., for all coordinated monostatic mmWave sensing measurement exchanges of a measurement session.

In some demonstrative aspects, it may be defined that the sensing initiator STA is to inform the sensing responder STA of the repetition amount of each beam it expects the sensing responder STA to sweep during, for example, during the whole process, e.g., for all coordinated monostatic mmWave sensing measurement exchanges of a measurement session.

For example, it may be defined that the sensing initiator STA is to include the indices of beams it expects the sensing responder STA to sweep, and the repetition amount of each beam, for example, in a Sensing Measurement Request frame transmitted to the sensing responder STA.

In some demonstrative aspects, it may be defined that the sensing initiator STA is to choose a duration of a TWT SP scheduled for an *i*-th sensing responder STA to be a maximum time needed for sweeping *Mᵢ* beams and/or repeating *Nᵢ* times for all the beams that are expected to cover. For example, as a result, the *i*-th sensing responder STA may have sufficient time to sweep the *Mᵢ* beams and repeat each beam *Nᵢ* times in each TWT SP scheduled for it.

In some demonstrative aspects, it may be defined that the sensing initiator STA is to schedule TWT SPs in a sequential and/or non-overlapping manner, for example, when scheduling TWT SPs for different sensing responder STAs.

For example, it may be defined that the sensing initiator STA may allocate the TWT SPs, for example, such that each sensing responder is allocated a non-overlapping TWT SP, and the TWT SPs for different responders are allocated back-to-back.

In some demonstrative aspects, device 102 and/or device 140 may be configured to perform one or more operations and/or functionalities of an AP-initiated TWT scheduling mechanism, which may support a TWT scheduling of time allocation for a coordinated monostatic sensing, e.g., as described below.

For example, a sensing initiator STA, e.g., a STA implemented by device 102, may typically be an AP, and may be configured to initiate the TWT scheduling of the time allocation for the coordinated monostatic sensing.

In some demonstrative aspects, it may be defined that the sensing initiator STA is to initiate TWT scheduling for the coordinated monostatic sensing, for example, using an individual TWT, e.g., as described below.

For example, the AP, e.g., an AP implemented by device 102, may utilize an unsolicited TWT response, for example, to initiate a negotiation and/or scheduling of individual TWT SPs with one or more of the responder STAs, e.g., with each sensing responder STA. For example, this implementation of the unsolicited TWT response may be in opposed to a TWT request/response frame exchange, which may be typically initiated by a non-AP STA.

In some demonstrative aspects, it may be defined that the sensing initiator STA is to initiate TWT scheduling for the coordinated monostatic sensing, for example, using a broadcast TWT, e.g., as described below.

For example, the AP may schedule a broadcast TWT and invite at least some, e.g., all, of the sensing responder STAs to become members of the broadcast TWT. For example, the AP may trigger a sensing responder STA, e.g., each, sensing responder STA, to perform a monostatic sensing, e.g., sequentially, for example, during the scheduled broadcast TWT SPs.

In some demonstrative aspects, device 102 and/or device 140 may be configured to perform one or more operations and/or functionalities of a monostatic sensing mechanism, which may support communication of monostatic sensing PPDUs, e.g., as described below.

In one example, transmission of monostatic sensing PPDUs may be trigger-based.

For example, an AP, e.g., an AP implemented by device 102, may, e.g., will, send a sensing trigger frame, for example, to trigger a sensing responder STA, e.g., a STA implemented by device 140, to send monostatic sensing PPDUs, e.g., in case of a trigger-based PPDU transmission.

In another example, transmission of monostatic sensing PPDUs may be non-trigger-based.

For example, a trigger frame may not be needed, e.g., in case of a non-trigger-based PPDU transmission.

In some demonstrative aspects, device 102 and/or device 140 may be configured to perform one or more operations and/or functionalities of a sensing measurement report collection mechanism, which may support communication of a sensing measurement report from a sensing responder STA to a sensing initiator STA, e.g., as described below.

For example, it may be defined that a sensing responder STA, e.g., a STA implemented by device 140, may transmit to a sensing initiator STA, e.g., an AP implemented by device 102, a sensing measurement report, for example, after the sensing responder STA completes a monostatic sensing exchange in a TWT SP.

In some demonstrative aspects, it may be defined the sensing responder STA is to transmit the sensing measurement report to the sensing initiator STA in the sub-7GHz link.

In one example, the sensing responder STA may transmit the sensing measurement report to the AP in a solicited manner in the sub-7GHz link.

For example, it may be defined that the sensing initiator STA, e.g., the AP implemented by device 102, is to send a trigger frame to request the sensing responder STA to send the sensing measurement report, e.g., in case of a solicited sensing measurement report implementation.

F In another example, the sensing responder STA may transmit the sensing measurement report to the AP in an unsolicited manner in the sub-7GHz link.

For example, it may be defined that the sensing responder STA, e.g., the STA implemented by device 140, is to send the sensing measurement report to the AP on its own, e.g., without waiting for a trigger frame from the AP, for example, in case of an unsolicited sensing measurement report implementation.

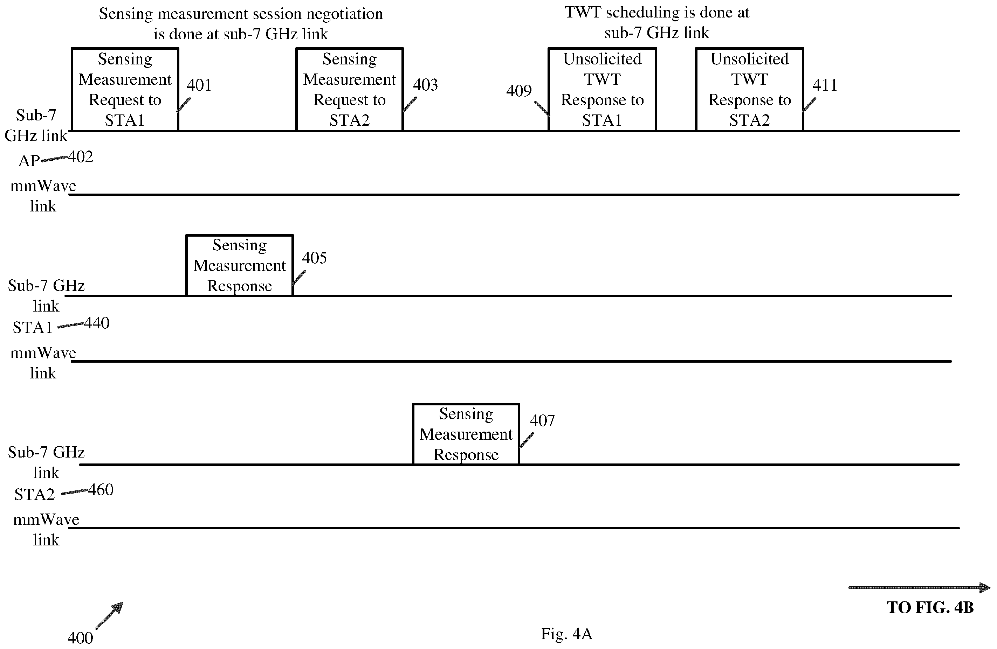

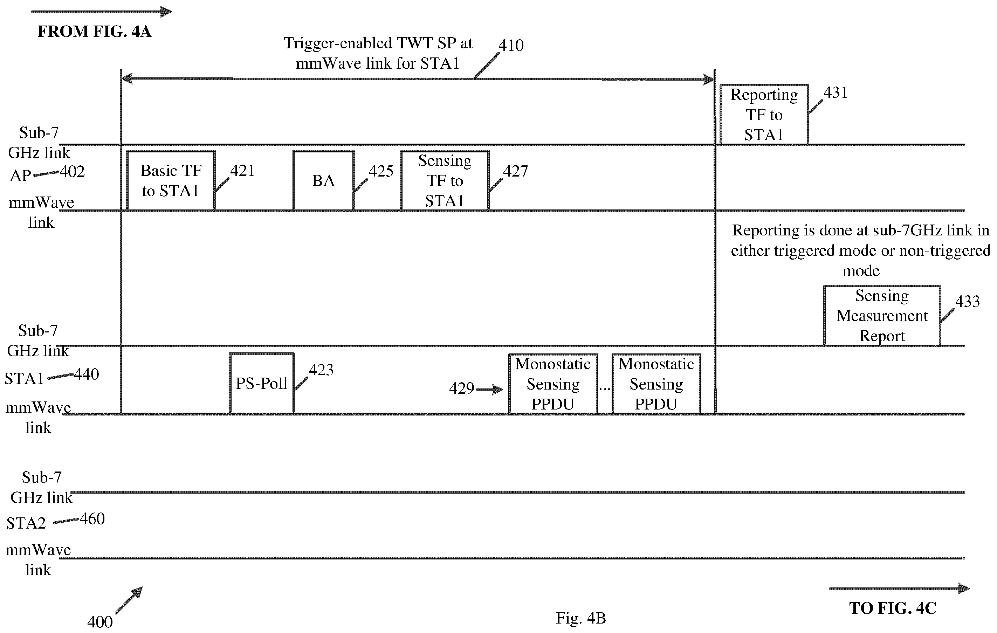

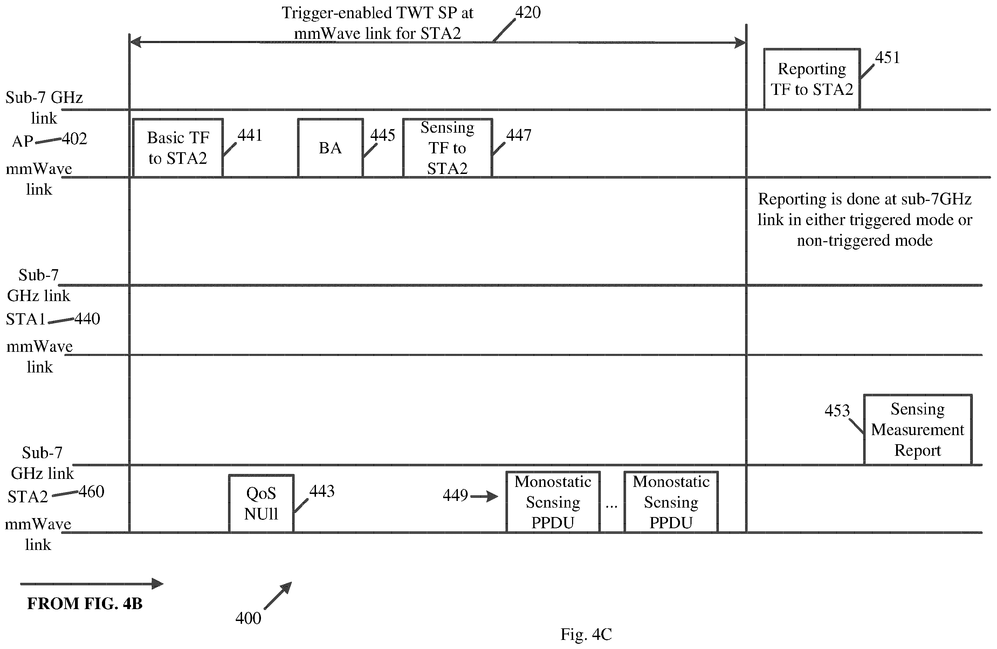

Reference is made to Figs. 4A, 4B and 4C, which schematically illustrate a coordinated monostatic sensing procedure 400 in a sequential mode using a TWT, in accordance with some demonstrative aspects.

In some demonstrative aspects, as shown in Figs. 4A, 4B and 4C, one or more operations and/or communications of the coordinated monostatic sensing procedure 400 may be performed by an AP 402, e.g., including a sub-10GHz AP and an mmWave AP; a non-AP STA 440, e.g., including a sub-10GHz non-AP STA and an mmWave non-AP STA; and a non-AP STA 460, e.g., including a sub-10GHz non-AP STA and an mmWave non-AP STA.

For example, controller 124 (Fig. 1) may be configured to control, trigger, and/or cause device 102 (Fig. 1) to perform a role of, one or more operations of, and/or one or more functionalities of, the AP 402; and/or controller 154 (Fig. 1) may be configured to control, trigger, and/or cause device 140 (Fig. 1) to perform a role of, one or more operations of, and/or one or more functionalities of, a non-AP STA, e.g., the non-AP STA 440 or the non-AP STA 460.

For example, the AP 402 may perform a role of, one or more operations of, and/or one or more functionalities of, a sensing initiator STA; the non-AP STA 440 may perform a role of, one or more operations of, and/or one or more functionalities of, a first sensing responder STA; and/or the non-AP STA 460 may perform a role of, one or more operations of, and/or one or more functionalities of, a second sensing responder STA.

In some demonstrative aspects, as shown in Figs. 4A, 4B and 4C, AP 402 may schedule one or more timeslots of coordinated monostatic sensing procedure 400 for non-AP STA 440 (STA1) and non-AP STA 460 (STA2), e.g., as described below.

In some demonstrative aspects, as shown in Fig. 4A, AP 402, non-AP STA 440 and/or non-AP STA 460 may perform sensing measurement session negotiation over a sub-7GHz wireless communication band, e.g., as described below.

In some demonstrative aspects, as shown in Fig. 4A, AP 402 may transmit to non-AP device 440 (STA1) a sensing measurement request frame 401, for example, over the sub-7GHz wireless communication band.

For example, sensing measurement request frame 401 may be configured to set a first count of beams to be swept by STA1 during a first monostatic sounding, and/or a first count of repetitions per beam during the first monostatic sounding.

In some demonstrative aspects, STA1 may process the sensing measurement request frame 401 received from AP 402 over the sub-7GHz wireless communication band, for example, to identify a setting of the first count of beams and/or the first count of repetitions per beam during the first monostatic sounding.

In some demonstrative aspects, as shown in Fig. 4A, STA1 may transmit to AP 402 a sensing measurement response 405, for example, to acknowledge the setup of the first monostatic sounding.

In some demonstrative aspects, as shown in Fig. 4A, AP 402 may transmit to non-AP device 460 (STA2) a sensing measurement request frame 403, for example, over the sub-7GHz wireless communication band.

For example, sensing measurement request frame 403 may be configured to set a second count of beams to be swept by STA2 during a second monostatic sounding, and/or a second count of repetitions per beam during the second monostatic sounding.

In some demonstrative aspects, STA2 may process the sensing measurement request frame 403 received from AP 402 over the sub-7GHz wireless communication band, for example, to identify a setting of the second count of beams and/or the second count of repetitions per beam during the second monostatic sounding.

In some demonstrative aspects, as shown in Fig. 4A, STA2 may transmit to AP 402 a sensing measurement response 407, for example, to acknowledge the setup of the second monostatic sounding.

In some demonstrative aspects, AP 402 may transmit one or more timeslot-scheduling frames over a sub-7GHz wireless communication frequency band, for example, to schedule one or more timeslots of a coordinated monostatic mmWave sensing measurement exchange for a plurality of sensing responder STAs.

In some demonstrative aspects, as shown in Fig. 4A, AP 402 may transmit an unsolicited TWT response 409 addressed to STA1, for example, over the sub-7GHz wireless communication band.

In some demonstrative aspects, as shown in Fig. 4A, AP 402 may transmit an unsolicited TWT response 411 addressed to STA2, for example, over the sub-7GHz wireless communication band.

In some demonstrative aspects, as shown in Figs. 4A and 4B, AP 402 may configure the unsolicited TWT response 409 to schedule for STA1 a trigger-enabled TWT SP 410 at an mmWave link.

In some demonstrative aspects, as shown in Fig. 4B, AP 402 may transmit a basic trigger frame 421 to STA1 during the trigger-enabled TWT SP 410, for example, over the mmWave link.

In some demonstrative aspects, as shown in Fig. 4B, STA1 may send a PS poll frame 423 over the mmWave link, for example, in response to the basic trigger frame 421.

In some demonstrative aspects, as shown in Fig. 4B, AP 402 may transmit a Block Acknowledgement (BA) frame 425 over the mmWave link, for example, based on receipt of the PS poll frame 423.

In some demonstrative aspects, as shown in Fig. 4B, AP 402 may transmit a sensing trigger frame (TF) 427 to STA1 over the mmWave link.

In some demonstrative aspects, STA1 may perform a monostatic sounding, for example, based on receipt of the sensing trigger frame 427 from AP 402.

In other aspects, sensing trigger frame 427 may be optional and AP 402 may select not to transmit sensing trigger frame 427. For example, STA1 may perform the monostatic sounding, for example, even without waiting to receive the sensing trigger frame 427 from AP 402.

In some demonstrative aspects, as shown in Fig. 4B, STA1 may transmit one or more monostatic sensing PPDUs 429 over the mmWave wireless communication band, for example, as part of the monostatic sounding.

In some demonstrative aspects, as shown in Fig. 4B, there may be a reporting phase after a sensing sounding phase. For example, as shown in Figs. 4B and 4C, the reporting phase may be performed over the sub-7GHz wireless communication band, for example, sequentially, e.g., per sending responder STA. In other aspects, the reporting phase may be performed over the sub-7GHz wireless communication band simultaneously by several sensing responder STAs.

In some demonstrative aspects, as shown in Fig. 4B, AP 402 may transmit a reporting trigger frame 431 to STA1 over the sub-7GHz wireless communication band. In other aspects, the reporting trigger frame 431 may be optional, and AP 402 may select not to transmit reporting trigger frame 431.

In some demonstrative aspects, as shown in Fig. 4B, STA1 may transmit a sensing measurement report 433 to AP 402 over the sub-7GHz wireless communication band, e.g., in response to the reporting trigger frame 431, if implemented. For example, sensing measurement report 433 may include measurement information, which may be based on reception of the one or more monostatic sensing PPDUs 429 at STA1.

In some demonstrative aspects, as shown in Figs. 4A and 4C, AP 402 may configure the unsolicited TWT response 409 to schedule for STA2 a trigger-enabled TWT SP 420 at the mmWave link.

In some demonstrative aspects, as shown in Fig. 4C, AP 402 may transmit a basic trigger frame 441 to STA2 during the trigger-enabled TWT SP 420, for example, over the mmWave link.

In some demonstrative aspects, as shown in Fig. 4C, STA2 may send a QoS null frame 443 over the mmWave link, for example, in response to the basic trigger frame 441.

In some demonstrative aspects, as shown in Fig. 4C, AP 402 may transmit a BA frame 445 over the mmWave link, for example, based on receipt of the QoS null frame 443.

In some demonstrative aspects, as shown in Fig. 4C, AP 402 may transmit a sensing trigger frame 447 to STA2 over the mmWave link.

In some demonstrative aspects, STA2 may perform a monostatic sounding, for example, based on receipt of the sensing trigger frame 447 from AP 402.

In other aspects, sensing trigger frame 447 may be optional and AP 402 may select not to transmit sensing trigger frame 447. For example, STA2 may perform the monostatic sounding, for example, even without waiting to receive the sensing trigger frame 447 from AP 402.

In some demonstrative aspects, as shown in Fig. 4C, STA2 may transmit one or more sensing PPDUs 449 over the mmWave wireless communication band, for example, as part of the monostatic sounding.

In some demonstrative aspects, as shown in Fig. 4C, AP 402 may transmit a reporting trigger frame 451 to STA2 over the sub-7GHz wireless communication band. In other aspects, the reporting trigger frame 451 may be optional, and AP 402 may select not to transmit reporting trigger frame 451.

In some demonstrative aspects, as shown in Fig. 4C, STA2 may transmit a sensing measurement report 453 to AP 402 over the sub-7GHz wireless communication band. For example, sensing measurement report 453 may include measurement information, which may be based on reception of the one or more monostatic sensing PPDUs 449 at STA2.

Referring back to Fig. 1, in some demonstrative aspects, device 102 and/or device 140 may be configured to perform one or more operations and/or functionalities of a coordinated monostatic sensing mechanism, which may support a coordinated monostatic sensing in a parallel mode, e.g., as described below.

In some demonstrative aspects, it may be defined that a sensing initiator STA of support a coordinated monostatic sensing in the parallel mode, e.g., a STA implemented by device 102, is to schedule periodic TWT SPs for multiple sensing responder STAs.

In some demonstrative aspects, it may be defined that the sensing initiator STA is to make sure that different sensing responder STAs are scheduled within overlapping and/or aligned TWT SPs.

In some demonstrative aspects, the coordinated monostatic sensing in the parallel mode may be defined to include operations similar to the coordinated monostatic sensing in the sequential mode, for example, with one or more of the following modifications:
- A duration of the TWT SP should be the maximum time needed for any sensing responder STA of the scheduled sensing responder STAs to complete the sweeping of beams and repetitions.
- When scheduling TWT SPs for different sensing responders, the sensing initiator may, e.g., may be required to, schedule the sensing responders in the same series of aligned TWT SP, so that all sensing responders can perform monostatic sensing in the same TWT SP each time.
- Both an individual TWT or a broadcast TWT may be considered for the parallel mode of the coordinated monostatic sensing.
- The sensing measurement report collection may be either solicited (triggered) or unsolicited. For example, in case of the solicited (triggered) mode, the sensing initiator STA may either solicit a sensing measurement report back from multiple sensing responder STAs simultaneously, or the sensing initiator STA may solicit the sensing measurement report sequentially from one sensing responder STA at a time.

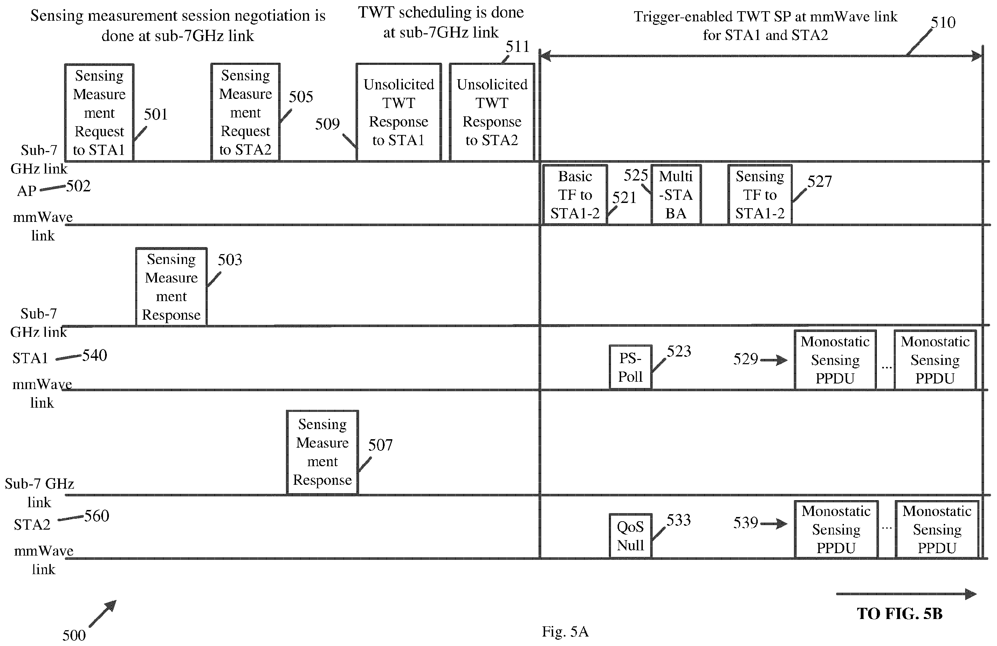

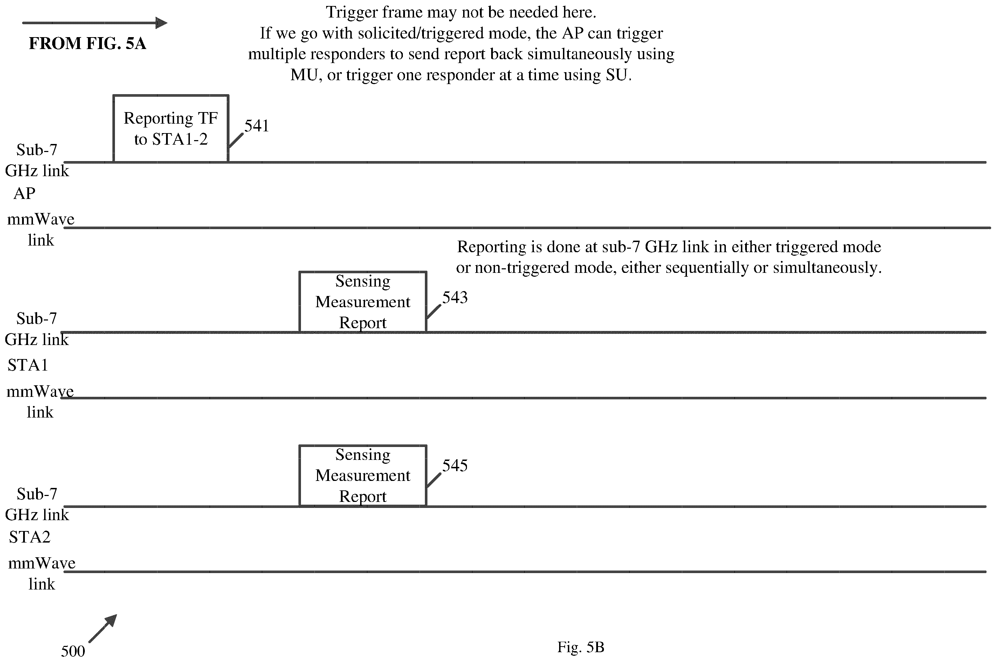

Reference is made to Figs. 5A and 5B, which schematically illustrate a coordinated monostatic sensing procedure 500 in a parallel mode using a TWT, in accordance with some demonstrative aspects.

In some demonstrative aspects, as shown in Figs. 5A and 5B, one or more operations and/or communications of the coordinated monostatic sensing procedure 500 may be performed by an AP 502, e.g., including a sub-10GHz AP and an mmWave AP; a non-AP STA 540, e.g., including a sub-10GHz non-AP STA and an mmWave non-AP STA; and a non-AP STA 560, e.g., including a sub-10GHz non-AP STA and an mmWave non-AP STA.

For example, controller 124 (Fig. 1) may be configured to control, trigger, and/or cause device 102 (Fig. 1) to perform a role of, one or more operations of, and/or one or more functionalities of, the AP 502; and/or controller 154 (Fig. 1) may be configured to control, trigger, and/or cause device 140 (Fig. 1) to perform a role of, one or more operations of, and/or one or more functionalities of, a non-AP STA, e.g., the non-AP STA 540 or the non-AP STA 560.

For example, the AP 502 may perform a role of, one or more operations of, and/or one or more functionalities of, a sensing initiator STA; the non-AP STA 540 may perform a role of, one or more operations of, and/or one or more functionalities of, a sensing responder STA; and/or the non-AP STA 560 may perform a role of, one or more operations of, and/or one or more functionalities of, a sensing responder STA.

In some demonstrative aspects, as shown in Figs. 5A and 5B, AP 502 may schedule one or more timeslots of coordinated monostatic sensing procedure 500 for non-AP STA 540 (STA1) and non-AP STA 560 (STA2), e.g., as described below.

In some demonstrative aspects, as shown in Fig. 5A, AP 502, non-AP STA 540 and/or non-AP STA 560 may perform sensing measurement session negotiation over a sub-7GHz wireless communication band, e.g., as described below.

In some demonstrative aspects, as shown in Fig. 5A, AP 502 may transmit to non-AP device 540 (STA1) a sensing measurement request frame 501, for example, over the sub-7GHz wireless communication band.

For example, sensing measurement request frame 501 may be configured to set a first count of beams to be swept by STA1 during a first monostatic sounding, and/or a first count of repetitions per beam during the first monostatic sounding.

In some demonstrative aspects, STA1 may process the sensing measurement request frame 501 received from AP 502 over the sub-7GHz wireless communication band, for example, to identify a setting of the first count of beams and/or the first count of repetitions per beam during the first monostatic sounding.

In some demonstrative aspects, as shown in Fig. 5A, STA1 may transmit to AP 502 a sensing measurement response 503, for example, to acknowledge the setup of the first monostatic sounding.

In some demonstrative aspects, as shown in Fig. 5A, AP 502 may transmit to non-AP device 560 (STA2) a sensing measurement request frame 505, for example, over the sub-7GHz wireless communication band.

For example, sensing measurement request frame 505 may be configured to set a second count of beams to be swept by STA2 during a second monostatic sounding, and/or a second count of repetitions per beam during the second monostatic sounding.

In some demonstrative aspects, STA2 may process the sensing measurement request frame 505 received from AP 502 over the sub-7GHz wireless communication band, for example, to identify a setting of the first count of beams and/or the first count of repetitions per beam during the first monostatic sounding.

In some demonstrative aspects, as shown in Fig. 5A, STA2 may transmit to AP 502 a sensing measurement response 507, for example, to acknowledge the setup of the second monostatic sounding.

In some demonstrative aspects, AP 502 may transmit one or more timeslot-scheduling frames over the sub-7GHz wireless communication band, for example, to schedule one or more timeslots of a coordinated monostatic mmWave sensing measurement exchange for a plurality of sensing responder STAs.

In some demonstrative aspects, as shown in Fig. 5A, AP 502 may transmit an unsolicited TWT response 509 addressed to STA1, for example, over the sub-7GHz wireless communication band, for example, to schedule one or more timeslots of a coordinated monostatic mmWave sensing measurement exchange for STA1.

In some demonstrative aspects, as shown in Fig. 5A, AP 502 may transmit an unsolicited TWT response 511 addressed to STA2, for example, over the sub-7GHz wireless communication band, for example, to schedule one or more timeslots of a coordinated monostatic mmWave sensing measurement exchange for STA2.

In some demonstrative aspects, the coordinated monostatic mmWave sensing measurement exchange may include a parallel coordinated monostatic mmWave sensing measurement exchange.

For example, the parallel coordinated monostatic mmWave sensing measurement exchange may include a parallel-sounding timeslot for parallel monostatic sounding. For example, the parallel-sounding timeslot may include a first monostatic sounding for STA1 during a first time period, and a second monostatic sounding for STA2 during a second time period at least partially overlapping the first time period, e.g., as described below.

In some demonstrative aspects, as shown in Fig. 5A, AP 502 may configure the unsolicited TWT response 509 and the unsolicited TWT response 511 to schedule for STA1 and STA2 a trigger-enabled TWT SP 510 at an mmWave link.

In some demonstrative aspects, as shown in Fig. 5A, AP 502 may transmit a basic trigger frame 521 to STA1 and STA2 during the trigger-enabled TWT SP 510, for example, over the mmWave wireless communication band.

In some demonstrative aspects, as shown in Fig. 5A, STA1 may send a PS poll frame 523 over the mmWave wireless communication band, for example, in response to the basic trigger frame 521.

In some demonstrative aspects, as shown in Fig. 5A, STA2 may send a QoS null frame 533 over the mmWave wireless communication band, for example, in response to the basic trigger frame 521.

In some demonstrative aspects, as shown in Fig. 5A, AP 502 may transmit a multi-STA BA frame 525 over the mmWave wireless communication band, for example, based on receipt of the PS poll frame 523 from STA1 and the QoS null frame 533 from STA2.

In some demonstrative aspects, as shown in Fig. 5A, AP 502 may transmit a sensing trigger frame 527 to STA1 and STA2 over the mmWave wireless communication band. In other aspects, sensing trigger frame 527 may be optional and AP 502 may select not to transmit sensing trigger frame 527.

In some demonstrative aspects, STA1 may perform a monostatic sounding, for example, based on receipt of the sensing trigger frame 527 from AP 502.

In some demonstrative aspects, STA2 may perform a monostatic sounding, for example, based on receipt of the sensing trigger frame 527 from AP 502.

In some demonstrative aspects, as shown in Fig. 5A, STA1 may transmit one or more sensing PPDUs 529 over the mmWave wireless communication band, for example, as part of the monostatic sounding of the STA1.

In some demonstrative aspects, as shown in Fig. 5A, STA2 may transmit one or more sensing PPDUs 539 over the mmWave wireless communication band, for example, as part of the monostatic sounding of the STA2.

In some demonstrative aspects, as shown in Fig. 5A, the monostatic sounding of the STA2 may be during a time period at least partially overlapping a time period of the monostatic sounding of the STA1.

In some demonstrative aspects, as shown in Fig. 5A, there may be a reporting phase after a sensing sounding phase. For example, the reporting phase may be performed over the sub-7GHz wireless communication band, for example, either sequentially or simultaneously.

In some demonstrative aspects, as shown in Fig. 5B, AP 502 may transmit a reporting trigger frame 541 to STA1 and STA2 over the sub-7GHz wireless communication band. In other aspects, the reporting trigger frame 541 may be optional, and AP 502 may select not to transmit reporting trigger frame 541.

In some demonstrative aspects, as shown in Fig. 5B, STA1 may transmit a sensing measurement report 543 to AP 502 over the sub-7GHz wireless communication band, e.g., in response to the reporting trigger frame 541, if implemented. For example, sensing measurement report 543 may include measurement information, which may be based on reception of the one or more monostatic sensing PPDUs 529 at STA1.

In some demonstrative aspects, as shown in Fig. 5B, STA2 may transmit a sensing measurement report 545 to AP 502 over the sub-7GHz wireless communication band, e.g., in response to the reporting trigger frame 541, if implemented. For example, sensing measurement report 545 may include measurement information, which may be based on reception of the one or more monostatic sensing PPDUs 539 at STA2.

Referring back to Fig. 1, in some demonstrative aspects, device 102 and/or device 140 may be configured to perform one or more operations and/or functionalities of a coordinated monostatic sensing mechanism, which may support a coordinated monostatic sensing using availability windows as "sensing timeslots", e.g., as described below.

In some demonstrative aspects, device 102 and/or device 140 may be configured to perform one or more operations and/or functionalities of an availability window mechanism, e.g., in accordance with the *IEEE 802.11az Specification* and/or the *IEEE 802.11bf Specification,* for example, to schedule time periods for sensing responder STAs to perform a coordinated monostatic sensing, e.g., as described below.

In some demonstrative aspects, the coordinated monostatic sensing mechanism may include an availability window information exchange, e.g., as described below.

For example, it may be defined that a sensing initiator STA and/or a sensing responder STA are to indicate their availabilities during a sensing measurement session negotiation and/or setup phase.

For example, the sensing initiator STA and/or a sensing responder STA may indicate their availabilities using an Initiating STA (ISTA)/Responding STA (RSTA) Availability Window element, which may be included in the sensing measurement request and/or sensing measurement /response frames.

For example, the sensing initiator STA and/or a sensing responder STA may indicate their availabilities during the sensing measurement session negotiation and/or setup phase in the frames exchanged in the sub-7GHz.

In some demonstrative aspects, the coordinated monostatic sensing mechanism may include a coordinated monostatic sensing scheduling during the availability windows, e.g., as described below.

In some demonstrative aspects, it may be defined that, for example, after exchanging the availability information, the sensing initiator STA, e.g., the AP implemented by device 102, is to schedule one or more sensing availability windows for the sensing responder STAs, for example, to perform coordinated monostatic sensing, e.g., sequential monostatic sensing or parallel monostatic sensing. For example, the sensing initiator STA may schedule the coordinated monostatic sensing, for example, based on information provided by the sensing responder STAs.

For example, it may be defined that the sensing initiator STA is to schedule one or more TB sensing measurement exchange, for example, within each sensing availability window. For example, a TB sensing measurement exchange, e.g., each TB sensing measurement exchange, may include a polling phase and a sounding phase.

For example, it may be defined that in the polling phase, the sensing initiator STA, e.g., the AP implemented by device 102, may send a sensing polling trigger frame to one or more sensing responder STAs, for example, to check their availability.

For example, a sensing responder STA may respond with a frame, e.g., a CTS-to-self frame, for example, if the sensing responder STA is present and ready to perform a monostatic sensing.

For example, it may be defined that in the sounding phase, the sensing initiator STA, e.g., the AP implemented by device 102, may send a sensing sounding trigger frame, for example, to trigger one or more sensing responder STAs to transmit monostatic sensing PPDUs. Alternatively, the sensing sounding trigger frame may be omitted, and one or more of sensing responder STAs may transmit, e.g., directly transmit, monostatic sensing PPDUs.

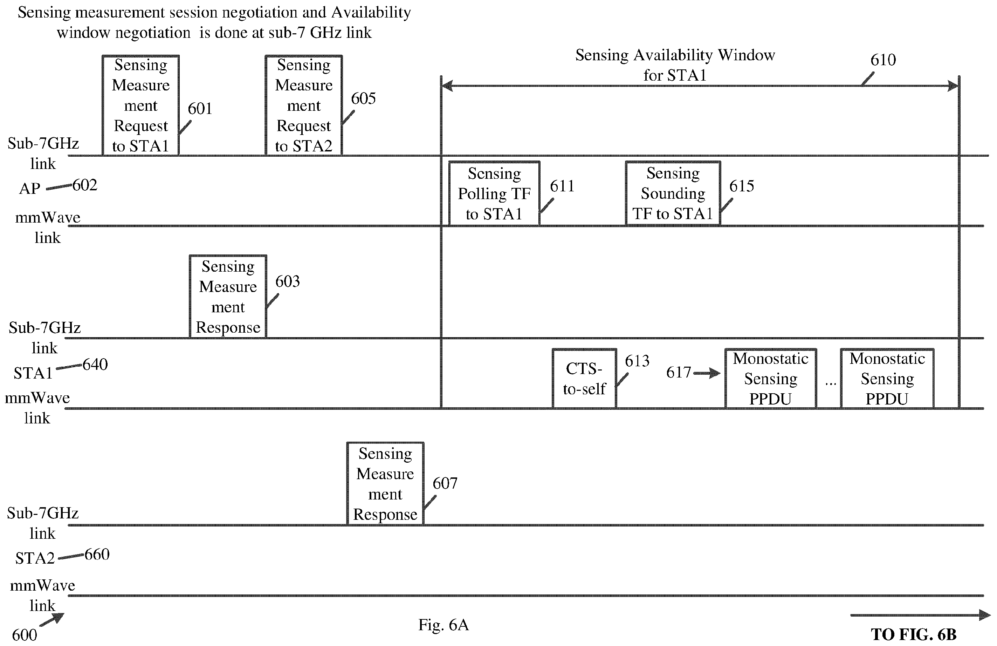

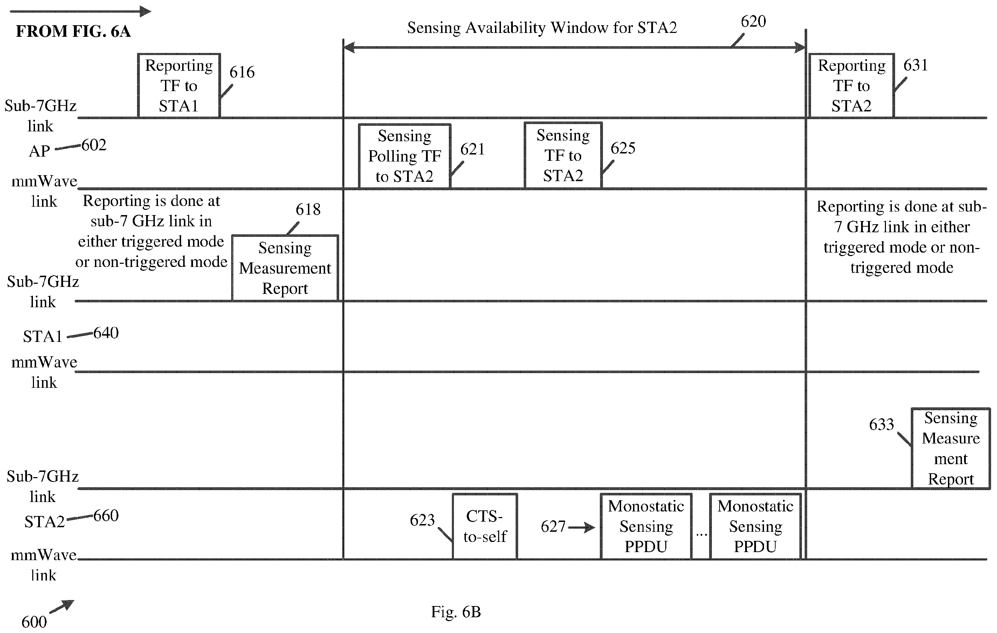

Reference is made to Figs. 6A and 6B, which schematically illustrate a coordinated monostatic sensing procedure 600 in a sequential mode using availability windows, in accordance with some demonstrative aspects.

In some demonstrative aspects, as shown in Figs. 6A and 6B, one or more operations and/or communications of the coordinated monostatic sensing procedure 600 may be performed by an AP 602, e.g., including a sub-10GHz AP and an mmWave AP; a non-AP STA 640, e.g., including a sub-10GHz non-AP STA and an mmWave non-AP STA; and a non-AP STA 660, e.g., including a sub-10GHz non-AP STA and an mmWave non-AP STA.

For example, controller 124 (Fig. 1) may be configured to control, trigger, and/or cause device 102 (Fig. 1) to perform a role of, one or more operations of, and/or one or more functionalities of, the AP 602; and/or controller 154 (Fig. 1) may be configured to control, trigger, and/or cause device 140 (Fig. 1) to perform a role of, one or more operations of, and/or one or more functionalities of, a non-AP STA, e.g., the non-AP STA 640 or the non-AP STA 660.

For example, the AP 602 may perform a role of, one or more operations of, and/or one or more functionalities of, a sensing initiator STA; the non-AP STA 640 may perform a role of, one or more operations of, and/or one or more functionalities of, a sensing responder STA; and/or the non-AP STA 660 may perform a role of, one or more operations of, and/or one or more functionalities of, a sensing responder STA.

In some demonstrative aspects, as shown in Figs. 6A and 6B, AP 602 may schedule one or more timeslots of coordinated monostatic sensing procedure 600 for non-AP STA 640 (STA1) and non-AP STA 660 (STA2), e.g., as described below.

In some demonstrative aspects, as shown in Fig. 6A, AP 602, non-AP STA 640 and/or non-AP STA 660 may perform sensing measurement session negotiation over a sub-7GHz wireless communication band, e.g., as described below.

In some demonstrative aspects, as shown in Fig. 6A, AP 602 may transmit to non-AP device 640 (STA1) a sensing measurement request frame 601, for example, over the sub-7GHz wireless communication band.

For example, sensing measurement request frame 601 may be configured to set a first count of beams to be swept by STA1 during a first monostatic sounding, and/or a first count of repetitions per beam during the first monostatic sounding.

In some demonstrative aspects, STA1 may process the sensing measurement request frame 601 received from AP 602 over the sub-7GHz wireless communication band, for example, to identify a setting of the first count of beams and/or the first count of repetitions per beam during the first monostatic sounding.

In some demonstrative aspects, as shown in Fig. 6A, STA1 may transmit to AP 602 a sensing measurement response 603, for example, to acknowledge the setup of the first monostatic sounding.

In some demonstrative aspects, as shown in Fig. 6A, AP 602 may transmit to non-AP device 660 (STA2) a sensing measurement request frame 605, for example, over the sub-7GHz wireless communication band.

For example, sensing measurement request frame 605 may be configured to set a second count of beams to be swept by STA2 during a second monostatic sounding, and/or a second count of repetitions per beam during the second monostatic sounding.

In some demonstrative aspects, STA2 may process the sensing measurement request frame 605 received from AP 602 over the sub-7GHz wireless communication band, for example, to identify a setting of the second count of beams and/or the second count of repetitions per beam during the second monostatic sounding.

In some demonstrative aspects, as shown in Fig. 6A, STA2 may transmit to AP 602 a sensing measurement response 607, for example, to acknowledge the setup of the second monostatic sounding.

In some demonstrative aspects, AP 602 may transmit one or more timeslot-scheduling frames over a sub-7GHz wireless communication frequency band, for example, to schedule one or more timeslots of a coordinated monostatic mmWave sensing measurement exchange for a plurality of sensing responder STAs.

In some demonstrative aspects, the one or more scheduled timeslots may include one or more sensing availability windows for one or more scheduled TB sensing measurement exchanges.

In some demonstrative aspects, as shown in Fig. 6A, AP 602 may schedule for STA1 a sensing availability window 610 at an mmWave link.

In some demonstrative aspects, as shown in Fig. 6A, AP 602 may transmit a sensing polling trigger frame 611 addressed to STA1 during the sensing availability window 610, for example, over an mmWave wireless communication band.

In some demonstrative aspects, as shown in Fig. 6A, STA1 may send a CTS-to-self frame 613 over the mmWave wireless communication band, for example, in response to the sensing polling trigger frame 611.

In some demonstrative aspects, as shown in Fig. 6A, AP 602 may transmit a sensing sounding trigger frame 615 to STA1 over the mmWave wireless communication band. In other aspects, sensing sounding trigger frame 615 may be optional and AP 602 may select not to transmit sensing sounding trigger frame 615.

In some demonstrative aspects, STA1 may perform a monostatic sounding, for example, based on receipt of the sensing sounding trigger frame 615 from AP 602, e.g., if implemented.

In some demonstrative aspects, as shown in Fig. 6A, STA1 may transmit one or more monostatic sensing PPDUs 617 over the mmWave wireless communication band, for example, as part of the monostatic sounding.

In some demonstrative aspects, as shown in Fig. 6B, there may be a reporting phase after a sensing sounding phase. For example, the reporting phase may be performed over the sub-7GHz wireless communication band, for example, in either a triggered mode or a non-triggered mode.

In some demonstrative aspects, as shown in Fig. 6B, AP 602 may transmit a reporting trigger frame 616 to STA1 over the sub-7GHz wireless communication band. In other aspects, the reporting trigger frame 616 may be optional, and AP 602 may select not to transmit reporting trigger frame 616.

In some demonstrative aspects, as shown in Fig. 6B, STA1 may transmit a sensing measurement report 618 to AP 602 over the sub-7GHz wireless communication band, for example, based on receipt of the reporting trigger frame 616, e.g., if implemented. For example, sensing measurement report 618 may include measurement information, which may be based on reception of the one or more monostatic sensing PPDUs 617 at STA1.

In some demonstrative aspects, as shown in Fig. 6B, AP 602 may schedule for STA2 a sensing availability window 620 at the mmWave link.

In some demonstrative aspects, as shown in Fig. 6B, AP 602 may transmit a sensing polling trigger frame 621 addressed to STA2 during the sensing availability window 620, for example, over the mmWave wireless communication band.

In some demonstrative aspects, as shown in Fig. 6B, STA2 may send a CTS-to-self frame 623 over the mmWave wireless communication band, for example, in response to the sensing polling trigger frame 621.

In some demonstrative aspects, as shown in Fig. 6B, AP 602 may transmit a sensing sounding trigger frame 625 to STA2 over the mmWave wireless communication band. In other aspects, sensing sounding trigger frame 625 may be optional and AP 602 may select not to transmit sensing sounding trigger frame 625.

In some demonstrative aspects, STA2 may perform a monostatic sounding, for example, based on receipt of the sensing sounding trigger frame 625 from AP 602, e.g., if implemented.

In some demonstrative aspects, as shown in Fig. 6B, STA2 may transmit one or more monostatic sensing PPDUs 627 over the mmWave wireless communication band, for example, as part of the monostatic sounding.

In some demonstrative aspects, as shown in Fig. 6B, AP 602 may transmit a reporting trigger frame 631 to STA2 over the sub-7GHz wireless communication band. In other aspects, the reporting trigger frame 631 may be optional, and AP 602 may select not to transmit reporting trigger frame 631.

In some demonstrative aspects, as shown in Fig. 6B, STA2 may transmit a sensing measurement report 633 to AP 602 over the sub-7GHz wireless communication band, for example, based on receipt of the reporting trigger frame 631, e.g., if implemented. For example, sensing measurement report 633 may include measurement information, which may be based on reception of the one or more monostatic sensing PPDUs 627 at STA2.

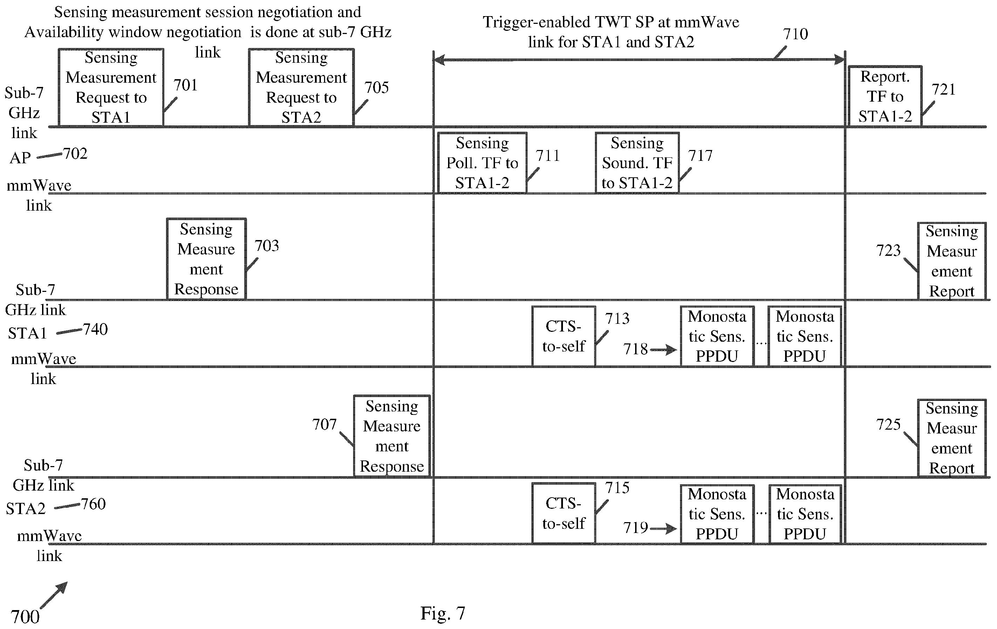

Reference is made to Fig. 7, which schematically illustrates a coordinated monostatic sensing procedure 700 in a parallel mode using one or more of availability windows, in accordance with some demonstrative aspects.

In some demonstrative aspects, as shown in Fig. 7, one or more operations and/or communications of the coordinated monostatic sensing procedure 700 may be performed by an AP 702, e.g., including a sub-10GHz AP and an mmWave AP; a non-AP STA 740, e.g., including a sub-10GHz non-AP STA and an mmWave non-AP STA; and a non-AP STA 760, e.g., including a sub-10GHz non-AP STA and an mmWave non-AP STA.

For example, controller 124 (Fig. 1) may be configured to control, trigger, and/or cause device 102 (Fig. 1) to perform a role of, one or more operations of, and/or one or more functionalities of, the AP 702; and/or controller 154 (Fig. 1) may be configured to control, trigger, and/or cause device 140 (Fig. 1) to perform a role of, one or more operations of, and/or one or more functionalities of, a non-AP STA, e.g., the non-AP STA 740 or the non-AP STA 760.

For example, the AP 702 may perform a role of, one or more operations of, and/or one or more functionalities of, a sensing initiator STA; the non-AP STA 740 may perform a role of, one or more operations of, and/or one or more functionalities of, a sensing responder STA; and/or the non-AP STA 760 may perform a role of, one or more operations of, and/or one or more functionalities of, a sensing responder STA.

In some demonstrative aspects, as shown in Fig. 7, AP 702 may schedule one or more timeslots of coordinated monostatic sensing procedure 700 for non-AP STA 740 (STA1) and non-AP STA 760 (STA2), e.g., as described below.

In some demonstrative aspects, as shown in Fig. 7, AP 702, non-AP STA 740 and/or non-AP STA 760 may perform sensing measurement session negotiation over a sub-7GHz wireless communication band, e.g., as described below.

In some demonstrative aspects, as shown in Fig. 7, AP 702 may transmit to non-AP device 740 (STA1) a sensing measurement request frame 701, for example, over the sub-7GHz wireless communication band.

For example, sensing measurement request frame 701 may be configured to set a first count of beams to be swept by STA1 during a first monostatic sounding, and/or a first count of repetitions per beam during the first monostatic sounding.

In some demonstrative aspects, STA1 may process the sensing measurement request frame 701 received from AP 702 over the sub-7GHz wireless communication band, for example, to identify a setting of the first count of beams and/or the first count of repetitions per beam during the first monostatic sounding.

In some demonstrative aspects, as shown in Fig. 7, STA1 may transmit to AP 702 a sensing measurement response 703, for example, to acknowledge the setup of the first monostatic sounding.

In some demonstrative aspects, as shown in Fig. 7, AP 702 may transmit to non-AP device 760 (STA2) a sensing measurement request frame 705, for example, over the sub-7GHz wireless communication band.

For example, sensing measurement request frame 705 may be configured to set a second count of beams to be swept by STA2 during a second monostatic sounding, and/or a second count of repetitions per beam during the second monostatic sounding.

In some demonstrative aspects, STA2 may process the sensing measurement request frame 705 received from AP 702 over the sub-7GHz wireless communication band, for example, to identify a setting of the second count of beams and/or the second count of repetitions per beam during the second monostatic sounding.

In some demonstrative aspects, as shown in Fig. 7, STA2 may transmit to AP 702 a sensing measurement response 707, for example, to acknowledge the setup of the second monostatic sounding.

In some demonstrative aspects, AP 702 may transmit one or more timeslot-scheduling frames over a sub-7GHz wireless communication frequency band, for example, to schedule one or more timeslots of a coordinated monostatic mmWave sensing measurement exchange for a plurality of sensing responder STAs.

In some demonstrative aspects, the one or more scheduled timeslots may include one or more sensing availability windows for one or more scheduled TB sensing measurement exchanges.

In some demonstrative aspects, as shown in Fig. 7, AP 702 may schedule for STA1 and STA2 a sensing availability window 710 at an mmWave link.

In some demonstrative aspects, as shown in Fig. 7, AP 702 may transmit a sensing polling trigger frame 711 addressed to STA1 and STA2 during the sensing availability window 710, for example, over an mmWave wireless communication band.

In some demonstrative aspects, as shown in Fig. 7, STA1 may send a CTS-to-self frame 713 over the mmWave wireless communication band, for example, in response to the sensing polling trigger frame 711.

In some demonstrative aspects, as shown in Fig. 7, STA2 may send a CTS-to-self frame 715 over the mmWave wireless communication band, for example, in response to the sensing polling trigger frame 711.

In some demonstrative aspects, as shown in Fig. 7, AP 702 may transmit a sensing sounding trigger frame 717 to STA1 and STA2 over the mmWave wireless communication band. In other aspects, sensing sounding trigger frame 717 may be optional and AP 702 may select not to transmit sensing sounding trigger frame 717.

In some demonstrative aspects, STA1 may perform a monostatic sounding, for example, based on receipt of the sensing sounding trigger frame 717 from AP 702, e.g., if implemented.

In some demonstrative aspects, STA2 may perform a monostatic sounding, for example, based on receipt of the sensing sounding trigger frame 717 from AP 702, e.g., if implemented.

In some demonstrative aspects, as shown in Fig. 7, STA1 may transmit one or more monostatic sensing PPDUs 718 over the mmWave wireless communication band, for example, as part of the monostatic sounding of the STA2.

In some demonstrative aspects, as shown in Fig. 7, STA2 may transmit one or more monostatic sensing PPDUs 719, e.g., in parallel with STA1, over the mmWave wireless communication band, for example, as part of the monostatic sounding of the STA2.

In some demonstrative aspects, as shown in Fig. 7, the monostatic sounding of the STA2 may be during a time period at least partially overlapping a time period of the monostatic sounding of the STA2.

In some demonstrative aspects, as shown in Fig. 7, there may be a reporting phase after a sensing sounding phase. For example, the reporting phase may be performed over the sub-7GHz wireless communication band, for example, in either a triggered mode or a non-triggered mode. For example, the reporting phase may be performed over the sub-7GHz wireless communication band, for example, in either a sequential mode or a parallel mode.

In some demonstrative aspects, as shown in Fig. 7, AP 702 may transmit a reporting trigger frame 721 to STA1 and STA2 over the sub-7GHz wireless communication band. In other aspects, the reporting trigger frame 721 may be optional, and AP 702 may select not to transmit reporting trigger frame 721.

In some demonstrative aspects, as shown in Fig. 7, STA1 may transmit a sensing measurement report 723 to AP 702 over the sub-7GHz wireless communication band. For example, sensing measurement report 723 may include measurement information, which may be based on reception of the one or more monostatic sensing PPDUs 718 at STA1.

In some demonstrative aspects, as shown in Fig. 7, STA2 may transmit a sensing measurement report 725 to AP 702 over the sub-7GHz wireless communication band, for example, in parallel with STA1. For example, sensing measurement report 725 may include measurement information, which may be based on reception of the one or more monostatic sensing PPDUs 719 at STA2.

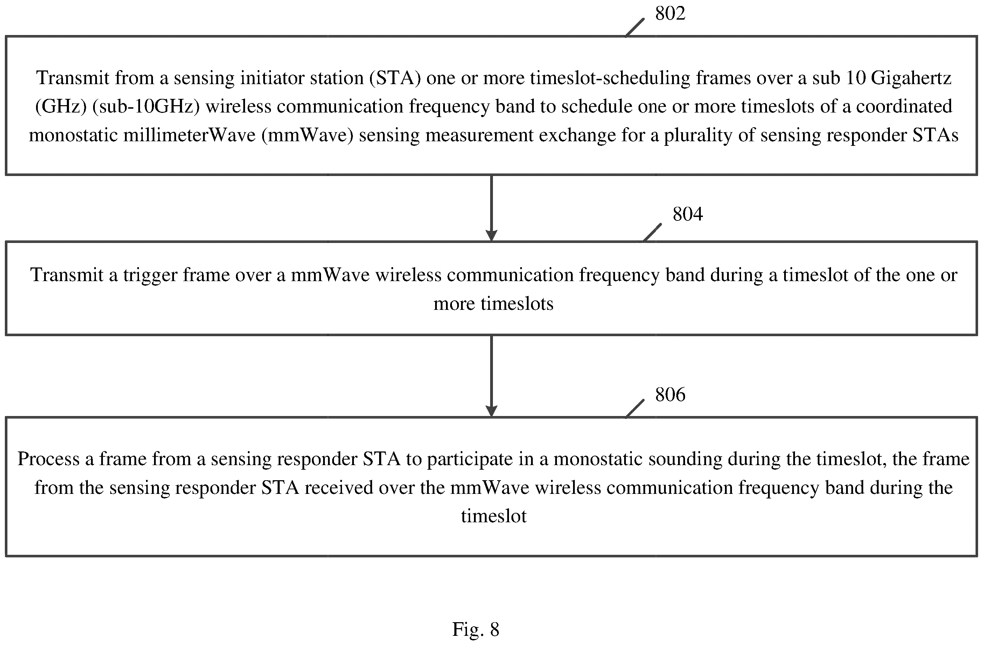

Reference is made to Fig. 8, which schematically illustrates a method of monostatic sensing over an mmWave band, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1) and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include transmitting from a sensing initiator STA one or more timeslot-scheduling frames over a sub-10GHz wireless communication frequency band, for example, to schedule one or more timeslots of a coordinated monostatic mmWave sensing measurement exchange for a plurality of sensing responder STAs. For example, controller 124 (Fig. 1) may be configured to cause, trigger, and/or control device 102 (Fig. 1) to transmit one or more timeslot-scheduling frames over a sub-10GHz wireless communication frequency band, for example, to schedule one or more timeslots of a coordinated monostatic mmWave sensing measurement exchange for a plurality of sensing responder STAs, e.g., as described above.

As indicated at block 804, the method may include transmitting a trigger frame over an mmWave wireless communication frequency band during a timeslot of the one or more timeslots. For example, controller 124 (Fig. 1) may be configured to cause, trigger, and/or control device 102 (Fig. 1) to transmit a trigger frame over an mmWave wireless communication frequency band during a timeslot of the one or more timeslots, e.g., as described above.

As indicated at block 806, the method may include processing a frame from a sensing responder STA to participate in a monostatic sounding during the timeslot. For example, the frame from the sensing responder STA may include a frame received over the mmWave wireless communication frequency band during the timeslot. For example, controller 124 (Fig. 1) may be configured to cause, trigger, and/or control device 102 (Fig. 1) to process a frame from a sensing responder STA to participate in a monostatic sounding during the timeslot, e.g., as described above.

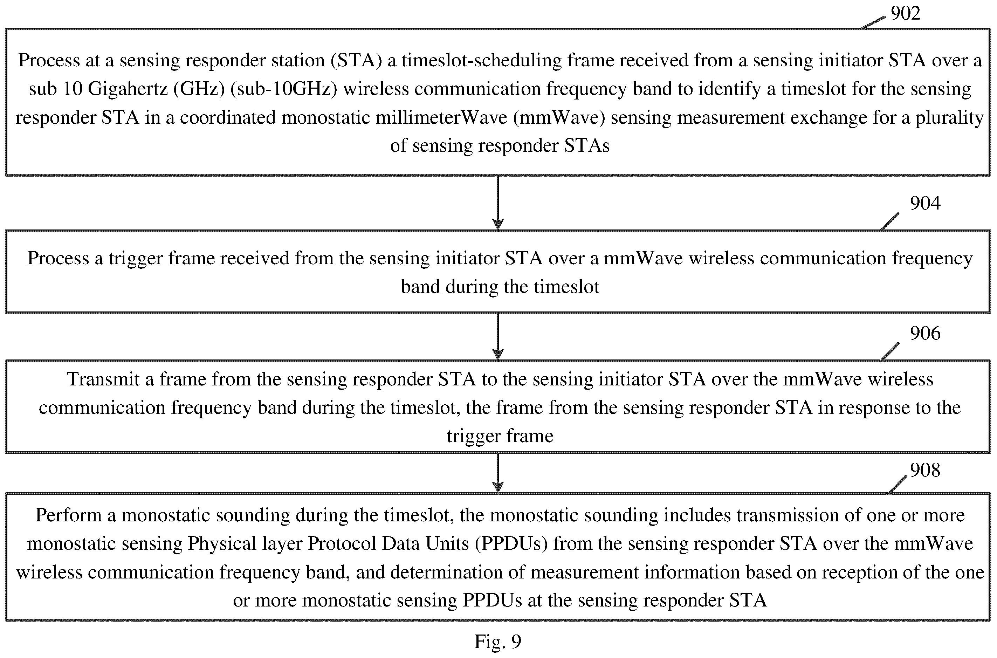

Reference is made to Fig. 9, which schematically illustrates a method of monostatic sensing over an mmWave band, in accordance with some demonstrative aspects. For example, one or more of the operations of the method of Fig. 9 may be performed by one or more elements of a system, e.g., system 100 (Fig. 1), for example, one or more wireless devices, e.g., device 102 (Fig. 1) and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 902, the method may include processing, at a sensing responder STA, a timeslot-scheduling frame received from a sensing initiator STA over a sub-10GHz wireless communication frequency band, for example, to identify a timeslot for the sensing responder STA in a coordinated monostatic mmWave sensing measurement exchange for a plurality of sensing responder STAs. For example, controller 154 (Fig. 1) may be configured to cause, trigger, and/or control device 140 (Fig. 1) to process a timeslot-scheduling frame received from a sensing initiator STA over a sub-10GHz wireless communication frequency band, for example, to identify a timeslot for the sensing responder STA in a coordinated monostatic mmWave sensing measurement exchange for a plurality of sensing responder STAs, e.g., as described above.

As indicated at block 904, the method may include processing a trigger frame received from the sensing initiator STA over an mmWave wireless communication frequency band during the timeslot. For example, controller 154 (Fig. 1) may be configured to cause, trigger, and/or control device 140 (Fig. 1) to process a trigger frame received from the sensing initiator STA over an mmWave wireless communication frequency band during the timeslot, e.g., as described above.

As indicated at block 906, the method may include transmitting a frame from the sensing responder STA to the sensing initiator STA over the mmWave wireless communication frequency band during the timeslot. For example, the frame from the sensing responder STA may include a frame transmitted in response to the trigger frame. For example, controller 154 (Fig. 1) may be configured to cause, trigger, and/or control device 140 (Fig. 1) to transmit the frame from the sensing responder STA to the sensing initiator STA over the mmWave wireless communication frequency band during the timeslot, e.g., as described above.

As indicated at block 908, the method may include performing a monostatic sounding during the timeslot. For example, the monostatic sounding may include transmission of one or more monostatic sensing PPDUs from the sensing responder STA over the mmWave wireless communication frequency band, and determination of measurement information, for example, based on reception of the one or more monostatic sensing PPDUs at the sensing responder STA. For example, controller 154 (Fig. 1) may be configured to cause, trigger, and/or control device 140 (Fig. 1) to perform the monostatic sounding during the timeslot, e.g., as described above.

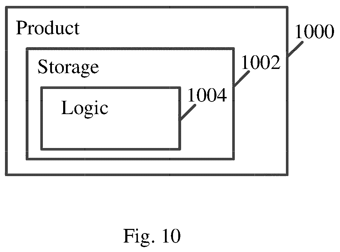

Reference is made to Fig. 10, which schematically illustrates a product of manufacture 1000, in accordance with some demonstrative aspects. Product 1000 may include one or more tangible computer-readable ("machine-readable") non-transitory storage media 1002, which may include computer-executable instructions, e.g., implemented by logic 1004, operable to, when executed by at least one computer processor, enable the at least one computer processor to implement one or more operations at device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1); to cause device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities; and/or to perform, trigger and/or implement one or more operations and/or functionalities described with reference to the Figs. 1-9, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1000 and/or machine readable storage media 1002 may include one or more types of computer-readable storage media capable of storing data, including volatile memory, non-volatile memory, removable or non-removable memory, erasable or non-erasable memory, writeable or re-writeable memory, and the like. For example, machine readable storage media 1002 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1004 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1004 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a sensing initiator station (STA) to transmit one or more timeslot-scheduling frames over a sub 10 Gigahertz (GHz) (sub-10GHz) wireless communication frequency band to schedule one or more timeslots of a coordinated monostatic millimeterWave (mmWave) sensing measurement exchange for a plurality of sensing responder STAs; transmit a trigger frame over an mmWave wireless communication frequency band during a timeslot of the one or more timeslots; and process a frame from a sensing responder STA to participate in a monostatic sounding during the timeslot, the frame from the sensing responder STA received over the mmWave wireless communication frequency band during the timeslot.

Example 2 includes the subject matter of Example 1, and optionally, wherein the coordinated monostatic mmWave sensing measurement exchange comprises a sequential coordinated monostatic mmWave sensing measurement exchange, wherein the one or more timeslots comprises a sequence of non-overlapping timeslots, the sequence of non-overlapping timeslots comprising a first timeslot for a first sensing responder STA, and a second timeslot, after the first timeslot, for a second sensing responder STA.

Example 3 includes the subject matter of Example 2, and optionally, wherein the apparatus is configured to cause the sensing initiator STA to configure a duration of the first timeslot based on a configuration of a first monostatic sounding for the first sensing responder STA, and to configure a duration of the second timeslot based on a configuration of a second monostatic sounding for the second sensing responder STA.

Example 4 includes the subject matter of Example 3, and optionally, wherein the apparatus is configured to cause the sensing initiator STA to set the configuration of the first monostatic sounding for the first sensing responder STA based on a measurement session negotiation with the first sensing responder STA, and to set the configuration of the second monostatic sounding for the second sensing responder STA based on a second measurement session negotiation with the second sensing responder STA.

Example 5 includes the subject matter of Example 3 or 4, and optionally, wherein the apparatus is configured to cause the sensing initiator STA to set a same first configuration of the first monostatic sounding for the first sensing responder STA for all coordinated monostatic mmWave sensing measurement exchanges of a measurement session, and to set a same second configuration of the second monostatic sounding for the second sensing responder STA for all the coordinated monostatic mmWave sensing measurement exchanges of the measurement session.

Example 6 includes the subject matter of any one of Examples 3-5, and optionally, wherein the apparatus is configured to cause the sensing initiator STA to set the configuration of the first monostatic sounding for the first sensing responder STA comprising a first count of beams to be swept by the first sensing responder STA during the first monostatic sounding, and a first count of repetitions per beam during the first monostatic sounding, and to set the configuration of the second monostatic sounding for the second sensing responder STA comprising a second count of beams to be swept by the second sensing responder STA during the second monostatic sounding, and a second count of repetitions per beam during the second monostatic sounding.

Example 7 includes the subject matter of Example 6, and optionally, wherein the apparatus is configured to cause the sensing initiator STA to transmit to the first sensing responder STA a first sensing measurement request frame over the sub-10GHz wireless communication band, and to transmit to the second sensing responder STA a second sensing measurement request frame over the sub-10GHz wireless communication band, wherein the first sensing measurement request frame is configured to set the first count of beams and the first count of repetitions per beam, the second sensing measurement request frame is configured to set the second count of beams and the second count of repetitions per beam.

Example 8 includes the subject matter of Example 7, and optionally, wherein the apparatus is configured to cause the sensing initiator STA to transmit the first sensing measurement request frame and the second sensing measurement request frame prior to the one or more timeslot-scheduling frames.

Example 9 includes the subject matter of any one of Examples 2-8, and optionally, wherein the apparatus is configured to cause the sensing initiator STA to transmit a first trigger frame to the first sensing responder STA over the mmWave wireless communication frequency band during the first timeslot; process a first frame received from the first sensing responder STA over the mmWave wireless communication frequency band during the first timeslot, the first frame in response to the first trigger frame; transmit a second trigger frame to the second sensing responder STA over the mmWave wireless communication frequency band during the second timeslot; and process a second frame received from the second sensing responder STA over the mmWave wireless communication frequency band during the second timeslot, the second frame in response to the second trigger frame.

Example 10 includes the subject matter of Example 9, and optionally, wherein the apparatus is configured to cause the sensing initiator STA to transmit a first sensing trigger frame to the first sensing responder STA based on the first frame received from the first sensing responder STA, and to transmit a second sensing trigger frame to the second sensing responder STA based on the second frame received from the second sensing responder STA, wherein the first sensing trigger frame is to trigger a first monostatic sounding for the first sensing responder STA during the first timeslot, the second sensing trigger frame is to trigger a second monostatic sounding for the second sensing responder STA during the second timeslot.

Example 11 includes the subject matter of any one of Examples 2-10, and optionally, wherein the apparatus is configured to cause the sensing initiator STA to process a first measurement report from the first sensing responder STA to identify first measurement information corresponding to a first monostatic sounding during the first timeslot, and to process a second measurement report from the second sensing responder STA to identify second measurement information corresponding to a second monostatic sounding during the second timeslot, wherein the first measurement report is received from the first sensing responder STA over the sub-10GHz wireless communication band after the first timeslot, the second measurement report is received from the second sensing responder STA over the sub-10GHz wireless communication band after the second timeslot.

Example 12 includes the subject matter of Example 11, and optionally, wherein the apparatus is configured to cause the sensing initiator STA to transmit a first reporting trigger frame to the first sensing responder STA over the sub-10GHz wireless communication band after the first timeslot, and to transmit a second reporting trigger frame to the second sensing responder STA over the sub-10GHz wireless communication band after the second timeslot, wherein the first reporting trigger frame is configured to solicit the first sensing responder STA to transmit the first measurement report, the second reporting trigger frame is configured to solicit the second sensing responder STA to transmit the second measurement report.

Example 13 includes the subject matter of any one of Examples 2-12, and optionally, wherein the sequence of non-overlapping timeslots comprises a first sequence of periodic timeslots for the first sensing responder STA, and a second sequence of periodic timeslots for the second sensing responder STA.

Example 14 includes the subject matter of any one of Examples 1-13, and optionally, wherein the coordinated monostatic mmWave sensing measurement exchange comprises a parallel coordinated monostatic mmWave sensing measurement exchange, wherein the one or more timeslots comprises a parallel-sounding timeslot for parallel monostatic sounding comprising a first monostatic sounding for a first sensing responder STA during a first time period, and a second monostatic sounding for a second sensing responder STA during a second time period at least partially overlapping the first time period.

Example 15 includes the subject matter of Example 14, and optionally, wherein the apparatus is configured to cause the sensing initiator STA to configure a duration of the parallel-sounding timeslot based on a configuration of the first monostatic sounding for the first sensing responder STA, and a configuration of the second monostatic sounding for the second sensing responder STA.

Example 16 includes the subject matter of Example 14 or 15, and optionally, wherein the apparatus is configured to cause the sensing initiator STA to configure a duration of the parallel-sounding timeslot based on a first duration of the first monostatic sounding for the first sensing responder STA, and a second duration of the second monostatic sounding for the second sensing responder STA.

Example 17 includes the subject matter of any one of Examples 14-16, and optionally, wherein the apparatus is configured to cause the sensing initiator STA to configure a duration of the parallel-sounding timeslot based on a maximal monostatic sounding duration for the parallel-sounding timeslot, the maximal monostatic sounding duration corresponding to a longest monostatic sounding of any sensing responder STA to participate in the parallel-sounding timeslot.

Example 18 includes the subject matter of any one of Examples 14-17, and optionally, wherein the apparatus is configured to cause the sensing initiator STA to set a configuration of the first monostatic sounding for the first sensing responder STA based on a measurement session negotiation with the first sensing responder STA, and to set the configuration of the second monostatic sounding for the second sensing responder STA based on a second measurement session negotiation with the second sensing responder STA.

Example 19 includes the subject matter of Example 18, and optionally, wherein the apparatus is configured to cause the sensing initiator STA to set a same first configuration of the first monostatic sounding for the first sensing responder STA for all coordinated monostatic mmWave sensing measurement exchanges of a measurement session, and to set a same second configuration of the second monostatic sounding for the second sensing responder STA for all the coordinated monostatic mmWave sensing measurement exchanges of the measurement session.

Example 20 includes the subject matter of Example 18 or 19, and optionally, wherein the apparatus is configured to cause the sensing initiator STA to set the configuration of the first monostatic sounding for the first sensing responder STA comprising a first count of beams to be swept by the first sensing responder STA during the first monostatic sounding, and a first count of repetitions per beam during the first monostatic sounding, and to set the configuration of the second monostatic sounding for the second sensing responder STA comprising a second count of beams to be swept by the second sensing responder STA during the second monostatic sounding, and a second count of repetitions per beam during the second monostatic sounding.

Example 21 includes the subject matter of Example 20, and optionally, wherein the apparatus is configured to cause the sensing initiator STA to transmit to the first sensing responder STA a first sensing measurement request frame over the sub-10GHz wireless communication band, and to transmit to the second sensing responder STA a second sensing measurement request frame over the sub-10GHz wireless communication band, wherein the first sensing measurement request frame is configured to set the first count of beams and the first count of repetitions per beam, the second sensing measurement request frame is configured to set the second count of beams and the second count of repetitions per beam.

Example 22 includes the subject matter of Example 21, and optionally, wherein the apparatus is configured to cause the sensing initiator STA to transmit the first sensing measurement request frame and the second sensing measurement request frame prior to the one or more timeslot-scheduling frames.

Example 23 includes the subject matter of any one of Examples 14-22, and optionally, wherein the apparatus is configured to cause the sensing initiator STA to transmit a trigger frame to the first sensing responder STA and the second sensing responder STA over the mmWave wireless communication frequency band during the parallel-sounding timeslot; process a first frame received from the first sensing responder STA over the mmWave wireless communication frequency band during the parallel-sounding timeslot, the first frame in response to the trigger frame; and process a second frame received from the second sensing responder STA over the mmWave wireless communication frequency band during the parallel-sounding timeslot, the second frame in response to the trigger frame.

Example 24 includes the subject matter of Example 23, and optionally, wherein the apparatus is configured to cause the sensing initiator STA to transmit a sensing trigger frame to the first sensing responder STA and the second sensing responder STA based on the first frame received from the first sensing responder STA and the second frame received from the second sensing responder STA, wherein the sensing trigger frame is to trigger the first monostatic sounding for the first sensing responder STA and the second monostatic sounding for the second sensing responder STA.

Example 25 includes the subject matter of any one of Examples 14-24, and optionally, wherein the apparatus is configured to cause the sensing initiator STA to process a first measurement report from the first sensing responder STA to identify first measurement information corresponding to the first monostatic sounding, and to process a second measurement report from the second sensing responder STA to identify second measurement information corresponding to the second monostatic sounding, wherein the first measurement report is received from the first sensing responder STA over the sub-10GHz wireless communication band after the parallel-sounding timeslot, the second measurement report is received from the second sensing responder STA over the sub-10GHz wireless communication band after the parallel-sounding timeslot.

Example 26 includes the subject matter of Example 25, and optionally, wherein the apparatus is configured to cause the sensing initiator STA to transmit a reporting trigger frame to the first sensing responder STA and to the second sensing responder STA over the sub-10GHz wireless communication band after the parallel-sounding timeslot, wherein the reporting trigger frame is configured to solicit the first sensing responder STA to transmit the first measurement report, and to solicit the second sensing responder STA to transmit the second measurement report.

Example 27 includes the subject matter of any one of Examples 1-26, and optionally, wherein the apparatus is configured to cause the sensing initiator STA to set a configuration of the monostatic sounding for the sensing responder STA comprising a first count of beams to be swept by the sensing responder STA during the monostatic sounding, and a count of repetitions per beam during first monostatic sounding.

Example 28 includes the subject matter of Example 27, and optionally, wherein the apparatus is configured to cause the sensing initiator STA to transmit to the sensing responder STA a sensing measurement request frame over the sub-10GHz wireless communication band, the sensing measurement request frame is configured to set the count of beams and the count of repetitions per beam for the sensing responder STA.

Example 29 includes the subject matter of Example 28, and optionally, wherein the apparatus is configured to cause the sensing initiator STA to transmit the sensing measurement request frame prior to the one or more timeslot-scheduling frames.

Example 30 includes the subject matter of any one of Examples 1-29, and optionally, wherein the apparatus is configured to cause the sensing initiator STA to process one or more measurement reports received from one or more sensing responder STAs over the sub-10GHz wireless communication frequency band, wherein the one or more measurement reports comprises a measurement report received from the sensing responder STA over the sub-10GHz wireless communication frequency band after the timeslot.

Example 31 includes the subject matter of any one of Examples 1-30, and optionally, wherein the one or more timeslots comprise one or more Target Wake Time (TWT) Service Periods (SPs), wherein the trigger frame comprises a basic trigger frame, the frame from the sensing responder STA comprising a Power Save (PS) poll frame or a Quality of Service (QoS) null frame.

Example 32 includes the subject matter of Example 31, and optionally, wherein the one or more timeslot-scheduling frames comprises a plurality of unsolicited TWT responses addressed to the plurality of sensing responder STAs, respectively.

Example 33 includes the subject matter of Example 31, and optionally, wherein the one or more timeslot-scheduling frames comprises a broadcast TWT frame to invite the plurality of sensing responder STAs to become members of a broadcast TWT.

Example 34 includes the subject matter of any one of Examples 1-33, and optionally, wherein the one or more timeslots comprise one or more sensing availability windows for one or more scheduled Trigger-Based (TB) sensing measurement exchanges, wherein the trigger frame comprises a sensing polling trigger frame, the frame from the sensing responder STA comprising a Clear to Send to self (CTS-to-self) frame.

Example 35 includes the subject matter of Example 34, and optionally, wherein the one or more timeslot-scheduling frames comprises a plurality of sensing measurement requests addressed to the plurality of sensing responder STAs, respectively.

Example 36 includes the subject matter of any one of Examples 1-35, and optionally, wherein the sub-10GHz wireless communication band is a sub-7GHz wireless communication band.

Example 37 includes the subject matter of any one of Examples 1-36, and optionally, wherein the sensing initiator STA comprises an Access Point (AP).

Example 38 includes the subject matter of any one of Examples 1-37, and optionally, wherein the sensing initiator STA comprises an Integrated millimeterWave (IMMW) STA.

Example 39 includes the subject matter of any one of Examples 1-38, and optionally, comprising at least one radio to transmit the one or more timeslot-scheduling frames and the trigger frame, and to receive the frame from the sensing responder STA.

Example 40 includes the subject matter of Example 40, and optionally, comprising one or more antennas connected to the radio, and a processor to execute instructions of an operating system.

Example 41 includes an apparatus comprising logic and circuitry configured to cause a sensing responder station (STA) to process a timeslot-scheduling frame received from a sensing initiator STA over a sub 10 Gigahertz (GHz) (sub-10GHz) wireless communication frequency band to identify a timeslot for the sensing responder STA in a coordinated monostatic millimeterWave (mmWave) sensing measurement exchange for a plurality of sensing responder STAs; process a trigger frame received from the sensing initiator STA over an mmWave wireless communication frequency band during the timeslot; transmit a frame from the sensing responder STA to the sensing initiator STA over the mmWave wireless communication frequency band during the timeslot, the frame from the sensing responder STA in response to the trigger frame; and perform a monostatic sounding during the timeslot, the monostatic sounding comprises transmission of one or more monostatic sensing Physical layer Protocol Data Units (PPDUs) from the sensing responder STA over the mmWave wireless communication frequency band, and determination of measurement information based on reception of the one or more monostatic sensing PPDUs at the sensing responder STA.

Example 42 includes the subject matter of Example 41, and optionally, wherein the apparatus is configured to cause the sensing responder STA to determine a configuration of the monostatic sounding for the sensing responder STA based on a measurement session negotiation with the sensing initiator STA.

Example 43 includes the subject matter of Example 42, and optionally, wherein the apparatus is configured to cause the sensing responder STA to determine a same configuration of the monostatic sounding for the sensing responder STA for all coordinated monostatic mmWave sensing measurement exchanges of a measurement session.

Example 44 includes the subject matter of Example 42 or 43, and optionally, wherein the apparatus is configured to cause the sensing responder STA to determine the configuration of the monostatic sounding for the sensing responder STA comprising a count of beams to be swept by the sensing responder STA during the monostatic sounding, and a count of repetitions per beam during the monostatic sounding.

Example 45 includes the subject matter of Example 44, and optionally, wherein the apparatus is configured to cause the sensing responder STA to process a sensing measurement request frame received from the sensing initiator STA over the sub-10GHz wireless communication band to identify a setting of the count of beams and the count of repetitions per beam.

Example 46 includes the subject matter of Example 45, and optionally, wherein the apparatus is configured to cause the sensing responder STA to process the sensing measurement request frame prior to receipt of the timeslot-scheduling frame.

Example 47 includes the subject matter of any one of Examples 41-46, and optionally, wherein the apparatus is configured to cause the sensing responder STA to perform the monostatic sounding based on a sensing trigger frame from the sensing initiator STA.

Example 48 includes the subject matter of any one of Examples 41-47, and optionally, wherein the apparatus is configured to cause the sensing responder STA to transmit a measurement report to the sensing initiator STA over the sub-10GHz wireless communication band after the timeslot, the measurement report comprising the measurement information.

Example 49 includes the subject matter of Example 48, and optionally, wherein the apparatus is configured to cause the sensing responder STA to transmit the measurement report based on a reporting trigger frame received from the sensing initiator STA over the sub-10GHz wireless communication band after the timeslot.

Example 50 includes the subject matter of any one of Examples 41-49, and optionally, wherein the coordinated monostatic mmWave sensing measurement exchange comprises a sequential coordinated monostatic mmWave sensing measurement exchange.

Example 51 includes the subject matter of any one of Examples 41-49, and optionally, wherein the coordinated monostatic mmWave sensing measurement exchange comprises a parallel coordinated monostatic mmWave sensing measurement exchange, wherein the one or more timeslots comprises a parallel-sounding timeslot for parallel monostatic sounding comprising a first monostatic sounding for a first sensing responder STA during a first time period, and a second monostatic sounding for a second sensing responder STA during a second time period at least partially overlapping the first time period.

Example 52 includes the subject matter of any one of Examples 41-51, and optionally, wherein the timeslot comprises a Target Wake Time (TWT) Service Period (SP), wherein the trigger frame comprises a basic trigger frame, the frame from the sensing responder STA comprising a Power Save (PS) poll frame or a Quality of Service (QoS) null frame.

Example 53 includes the subject matter of Example 52, and optionally, wherein the timeslot-scheduling frame comprises an unsolicited TWT response addressed to the sensing responder STA.

Example 54 includes the subject matter of Example 52, and optionally, wherein the timeslot-scheduling frame comprises a broadcast TWT frame to invite the plurality of sensing responder STAs to become members of a broadcast TWT.

Example 55 includes the subject matter of any one of Examples 41-51, and optionally, wherein the timeslot comprises a sensing availability window for a scheduled Trigger-Based (TB) sensing measurement exchange, wherein the trigger frame comprises a sensing polling trigger frame, the frame from the sensing responder STA comprising a Clear to Send to self (CTS-to-self) frame.

Example 56 includes the subject matter of Example 55, and optionally, wherein the timeslot-scheduling frame comprises a sensing measurement request addressed to the sensing responder STA.

Example 57 includes the subject matter of any one of Examples 41-56, and optionally, wherein the sub-10GHz wireless communication band is a sub-7GHz wireless communication band.

Example 58 includes the subject matter of any one of Examples 41-57, and optionally, wherein the sensing responder STA comprises a non Access Point (AP) STA.

Example 59 includes the subject matter of any one of Examples 41-58, and optionally, wherein the sensing responder STA comprises an Integrated millimeterWave (IMMW) STA.

Example 60 includes the subject matter of any one of Examples 41-59, and optionally, comprising at least one radio to receive the timeslot-scheduling frame and the trigger frame, to transmit the frame from the sensing responder STA, and to communicate the one or more monostatic sensing PPDUs.

Example 61 includes the subject matter of Example 60, and optionally, comprising one or more antennas connected to the radio, and a processor to execute instructions of an operating system.

Example 62 includes a wireless communication device comprising the apparatus of any of Examples 1-61.

Example 63 includes a mobile device comprising the apparatus of any of Examples 1-61.

Example 64 includes an apparatus comprising means for executing any of the described operations of any of Examples 1-61.

Example 65 includes a product comprising one or more tangible computer-readable non-transitory storage media comprising instructions operable to, when executed by at least one processor, enable the at least one processor to cause a wireless communication device to perform any of the described operations of any of Examples 1-61.

Example 66 includes an apparatus comprising: a memory interface; and processing circuitry configured to: perform any of the described operations of any of Examples 1-61.

Example 67 includes a method comprising any of the described operations of any of Examples 1-61.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a sensing initiator station (STA), the method comprising:
transmitting one or more timeslot-scheduling frames over a sub 10 Gigahertz (GHz) (sub-10GHz) wireless communication frequency band to schedule one or more timeslots of a coordinated monostatic millimeterWave (mmWave) sensing measurement exchange for a plurality of sensing responder STAs;
transmitting a trigger frame over an mmWave wireless communication frequency band during a timeslot of the one or more timeslots; and
processing a frame from a sensing responder STA to participate in a monostatic sounding during the timeslot, the frame from the sensing responder STA received over the mmWave wireless communication frequency band during the timeslot.

2. The method of claim 1, wherein the coordinated monostatic mmWave sensing measurement exchange comprises a sequential coordinated monostatic mmWave sensing measurement exchange, wherein the one or more timeslots comprises a sequence of non-overlapping timeslots, the sequence of non-overlapping timeslots comprising a first timeslot for a first sensing responder STA, and a second timeslot, after the first timeslot, for a second sensing responder STA.

3. The method of claim 2 comprising configuring a duration of the first timeslot based on a configuration of a first monostatic sounding for the first sensing responder STA, and configuring a duration of the second timeslot based on a configuration of a second monostatic sounding for the second sensing responder STA.

4. The method of claim 3 comprising setting a same first configuration of the first monostatic sounding for the first sensing responder STA for all coordinated monostatic mmWave sensing measurement exchanges of a measurement session, and setting a same second configuration of the second monostatic sounding for the second sensing responder STA for all the coordinated monostatic mmWave sensing measurement exchanges of the measurement session.

5. The method of claim 3 or 4 comprising setting the configuration of the first monostatic sounding for the first sensing responder STA comprising a first count of beams to be swept by the first sensing responder STA during the first monostatic sounding, and a first count of repetitions per beam during the first monostatic sounding, and setting the configuration of the second monostatic sounding for the second sensing responder STA comprising a second count of beams to be swept by the second sensing responder STA during the second monostatic sounding, and a second count of repetitions per beam during the second monostatic sounding.

6. The method of any one of claims 2-5 comprising:
transmitting a first trigger frame to the first sensing responder STA over the mmWave wireless communication frequency band during the first timeslot;
processing a first frame received from the first sensing responder STA over the mmWave wireless communication frequency band during the first timeslot, the first frame in response to the first trigger frame;
transmitting a second trigger frame to the second sensing responder STA over the mmWave wireless communication frequency band during the second timeslot; and
processing a second frame received from the second sensing responder STA over the mmWave wireless communication frequency band during the second timeslot, the second frame in response to the second trigger frame.

7. The method of claim 6 comprising transmitting a first sensing trigger frame to the first sensing responder STA based on the first frame received from the first sensing responder STA, and transmitting a second sensing trigger frame to the second sensing responder STA based on the second frame received from the second sensing responder STA, wherein the first sensing trigger frame is to trigger a first monostatic sounding for the first sensing responder STA during the first timeslot, the second sensing trigger frame is to trigger a second monostatic sounding for the second sensing responder STA during the second timeslot.

8. The method of any one of claims 2-7 comprising processing a first measurement report from the first sensing responder STA to identify first measurement information corresponding to a first monostatic sounding during the first timeslot, and processing a second measurement report from the second sensing responder STA to identify second measurement information corresponding to a second monostatic sounding during the second timeslot, wherein the first measurement report is received from the first sensing responder STA over the sub-10GHz wireless communication band after the first timeslot, the second measurement report is received from the second sensing responder STA over the sub-10GHz wireless communication band after the second timeslot.

9. The method of any one of claims 1-8, wherein the coordinated monostatic mmWave sensing measurement exchange comprises a parallel coordinated monostatic mmWave sensing measurement exchange, wherein the one or more timeslots comprises a parallel-sounding timeslot for parallel monostatic sounding comprising a first monostatic sounding for a first sensing responder STA during a first time period, and a second monostatic sounding for a second sensing responder STA during a second time period at least partially overlapping the first time period.

10. The method of claim 9 comprising configuring a duration of the parallel-sounding timeslot based on a configuration of the first monostatic sounding for the first sensing responder STA, and a configuration of the second monostatic sounding for the second sensing responder STA; based on a first duration of the first monostatic sounding for the first sensing responder STA, and a second duration of the second monostatic sounding for the second sensing responder STA; and/or based on a maximal monostatic sounding duration for the parallel-sounding timeslot, the maximal monostatic sounding duration corresponding to a longest monostatic sounding of any sensing responder STA to participate in the parallel-sounding timeslot.

11. The method of claim 9 or 10 comprising:
transmitting a trigger frame to the first sensing responder STA and the second sensing responder STA over the mmWave wireless communication frequency band during the parallel-sounding timeslot;
processing a first frame received from the first sensing responder STA over the mmWave wireless communication frequency band during the parallel-sounding timeslot, the first frame in response to the trigger frame; and
processing a second frame received from the second sensing responder STA over the mmWave wireless communication frequency band during the parallel-sounding timeslot, the second frame in response to the trigger frame.

12. The method of any one of claims 1-11 comprising setting a configuration of the monostatic sounding for the sensing responder STA comprising a first count of beams to be swept by the sensing responder STA during the monostatic sounding, and a count of repetitions per beam during first monostatic sounding.

13. An apparatus comprising a controller configured to cause a sensing initiator station (STA) to perform the method of any one of claims 1-12.

14. The apparatus of claim 13 comprising at least one radio to transmit the one or more timeslot-scheduling frames and the trigger frame, and to receive the frame from the sensing responder STA, one or more antennas connected to the radio, and a processor to execute instructions of an operating system.

15. A product comprising one or more tangible computer-readable non-transitory storage media comprising instructions operable to, when executed by at least one processor, enable the at least one processor to cause a sensing initiator station (STA) to perform the method of any one of claims 1-12.
